(19) **Europäisches Patentamt** / **European Patent Office** / **Office européen des brevets**

(11) **EP 4 286 215 A1**

(12) **EUROPÄISCHE PATENTANMELDUNG**

(43) Veröffentlichungstag:
06.12.2023   Patentblatt 2023/49

(21) Anmeldenummer: 23186007.3

(22) Anmeldetag: **22.11.2017**

(51) Internationale Patentklassifikation (IPC):
***B60L 58/18*** *(2019.01)*

(52) Gemeinsame Patentklassifikation (CPC):
**B60L 58/18;** Y02T 10/70

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2016   DE 102016014932**

(62) Dokumentnummer(n) der früheren Anmeldung(en) nach Art. 76 EPÜ:
**17202948.0 / 3 342 629**

(71) Anmelder: **MAN Truck & Bus SE**
**80995 München (DE)**

(72) Erfinder: **Kratzer, Sebastian**
**80995 München (DE)**

(74) Vertreter: **v. Bezold & Partner Patentanwälte - PartG mbB**
**Ridlerstraße 57**
**80339 München (DE)**

Bemerkungen:
Diese Anmeldung ist am 18.07.2023 als Teilanmeldung zu der unter INID-Code 62 erwähnten Anmeldung eingereicht worden.

(54) **TECHNIK ZUM VERÄNDERLICHEN VERSCHALTEN EINES TRAKTIONSENERGIESPEICHERSYSTEMS**

(57)   Ein Traktionsenergiespeichersystem für ein Fahrzeug wird beschrieben. Das Traktionsenergiespeichersystem umfasst mehrere elektrische Energiespeicher (110), wobei jeder der Energiespeicher über Stromschienen elektrisch verbundene Zellmodule, ein Schaltschütz, eine Energiespeicherhochvoltschnittstelle und eine das Schaltschütz steuernde Energiespeichersteuerung umfasst. Jedes der Zellmodule umfasst mehrere Speicherzellen und eine Zellmodulsteuerung. Die Zellmodulsteuerungen sind dazu ausgebildet, die Speicherzellen im jeweiligen Zellmodul betreffende Messwerte auszugeben. Die Energiespeichersteuerungen sind dazu ausgebildet, abhängig von den Messwerten der Zellmodule im jeweiligen Energiespeicher einen Speicherzustand zu bestimmen. In jedem Energiespeicher ist das Schaltschütz dazu ausgebildet, die Stromschienen des Energiespeichers mit der Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Das Traktionsenergiespeichersystem umfasst eine mit dem Fahrzeug verbundene oder verbindbare Systemhochvoltschnittstelle, die mit den Energiespeicherhochvoltschnittstellen der Energiespeicher verbunden ist, wobei die Energiespeicherhochvoltschnittstellen der Energiespeicher parallel geschaltet sind. Das Traktionsenergiespeichersystem umfasst ferner eine Systemsteuerung, die dazu ausgebildet ist, eine Fahrzeuganweisung zum Zuschalten gegenwärtig durch die Offenstellung getrennter Energiespeicher zu erhalten, die Speicherzustände (504; 506) der gegenwärtig getrennten Energiespeicher (110) abzufragen, auf Grundlage der abgefragten Speicherzustände die gegenwärtig getrennten Energiespeicher einem oder mehreren Clustern zuzuordnen, und nach Maßgabe der Clusterzuordnung die Energiespeicher durch Schließen der Schaltschütze mittels der jeweiligen Energiespeichersteuerungen zuzuschalten.

FIG. 5

**Beschreibung**

Die Erfindung betrifft ein Traktionsenergiespeichersystem für ein Fahrzeug, beispielsweise für ein Nutzfahrzeug. Insbesondere wird eine Technik zum veränderlichen Verschalten, beispielsweise zum Zuschalten, von Energiespeichern in einem Traktionsenergiespeichersystems beschrieben.

Die zumindest teilweise Elektrifizierung des Antriebsstrangs eines Fahrzeugs ist kostenintensiv. Zu den Kosten tragen die Entwicklung und die Erprobung des Energiespeichers wesentlich bei. Durch die Zahl verschiedener Anwendungsfälle und den damit verbundenen Entwicklungs- und Erprobungsaufwand vervielfachen sich die Kosten. Zum einen besteht oftmals der Wunsch, eine möglichst große Anzahl von Fahrzeugderivaten zu elektrifizieren. Zum anderen besteht bei jedem Fahrzeugderivat regelmäßig Bedarf nach unterschiedlichen Elektrifizierungsgraden, beispielsweise einem Batterie-Elektrofahrzeug (BEV), einem Plug-in-Hybridfahrzeug (PHEV) und einem Hybrid-Elektrofahrzeug (HEV).

Das Dokument DE 10 2010 002 939 A1 beschreibt einen herkömmlichen Energiespeicher. Der Energiespeicher umfasst eine Vielzahl einzelner Speicherzellen, wobei Gruppen von Speicherzellen jeweils zu einem Speichermodul und die Speichermodule zum Energiespeicher verschaltet sind.

Das Dokument US 2007/0080662 A1 beschreibt einen weiteren herkömmlichen Energiespeicher, der über die Leistungsverschaltung hinaus einen Datenbus aufweist. Der Datenbus verbindet Modulsteuerungen an den einzelnen Zellmodulen mit einer Steuerung des Energiespeichers.

Das Dokument DE 10 2007 038 532 A1 beschreibt einen als Batteriepack bezeichneten Energiespeicher mit mehreren miteinander verbundenen Zellen, die jeweils eine Spannung bereitstellen. Einer oder mehreren Zellen ist eine Überwachungsschaltung zugeordnet. Eine Kopplungsanordnung stellt auf Grundlage der Überwachungsschaltungen ein von den Zellen galvanisch getrenntes Zustandssignal bereit.

Wachsende Anforderungen an die gespeicherte Traktionsenergie, insbesondere für Nutzfahrzeuge, erfordern eine größere Anzahl an Zellen, so dass beispielsweise bei einem abgestellten Fahrzeug deren Ladezustände mit der Zeit auseinanderdriften. Divergierende Ladezustände stehen jedoch einem optimalen Betrieb entgegen. Aus Kostengründen, für einen kompakten modularen Aufbau oder zur besseren Energieeffizienz sind zwischen den Modulen oftmals keine Komponenten zur Strombegrenzung vorgesehen. Werden (beispielsweise bei der Inbetriebnahme des Fahrzeugs) Module zusammengeschaltet oder (beispielsweise im Betrieb) weitere Module hinzugeschaltet, können unterschiedliche Leerlaufspannung der verschalteten Module komponentenschädigende Ausgleichsströme verursachen. Die Schädigung kann Schaltschütze zum Verschalten der Module oder die Zellen betreffen.

Die eingesetzten Schaltschütze haben eine gewisse Lebensdauer bezüglich ihrer Schaltfähigkeit unter Last. Um die im Automobilbereich üblichen Lebensdauern tauschfrei zu erreichen, dürfen die Schaltschütze nur bis zu einer bauteilspezifischen Stromgrenze geschalten werden.

Somit ist eine Aufgabe der Erfindung, ein Traktionsenergiespeichersystem bereitzustellen, dessen Nutzungsdauer nicht durch Verschaltungsänderungen begrenzt wird. Eine weitere oder alternative Aufgabe der Erfindung ist, ein Traktionsenergiespeichersystem zur adaptiven Speicherung und Abgabe von Traktionsenergie bereitzustellen, das eine gleichmäßige Nutzung vieler Zellen ermöglicht.

Diese Aufgabe oder Aufgaben werden durch ein Traktionsenergiespeichersystem für ein Fahrzeug mit den Merkmalen des Anspruchs 1 gelöst. Vorteilhafte Ausgestaltungen sind Gegenstand der abhängigen Ansprüche.

Gemäß einem Aspekt umfasst ein Traktionsenergiespeichersystem für ein Fahrzeug mehrere elektrische Energiespeicher, wobei jeder der Energiespeicher über Stromschienen elektrisch verbundene Zellmodule, ein Schaltschütz, eine Energiespeicherhochvoltschnittstelle und eine das Schaltschütz steuernde Energiespeichersteuerung umfasst. Jedes der Zellmodule umfasst mehrere Speicherzellen und eine Zellmodulsteuerung. Die Zellmodulsteuerungen sind dazu ausgebildet, die Speicherzellen im jeweiligen Zellmodul betreffende Messwerte auszugeben. Die Energiespeichersteuerungen sind dazu ausgebildet, abhängig von den Messwerten der Zellmodule im jeweiligen Energiespeicher, einen Speicherzustand zu bestimmen. In jedem Energiespeicher ist das Schaltschütz dazu ausgebildet, die Stromschienen des Energiespeichers mit der Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Ferner umfasst das Traktionsenergiespeichersystem eine mit dem Fahrzeug verbundene oder verbindbare Systemhochvoltschnittstelle, die mit den Energiespeicherhochvoltschnittstellen der Energiespeicher verbunden ist. Die Energiespeicherhochvoltschnittstellen der Energiespeicher sind parallel geschaltet. Das Traktionsenergiespeichersystem umfasst ferner eine Systemsteuerung, die dazu ausgebildet ist, eine Fahrzeuganweisung zum Zuschalten gegenwärtig durch die Offenstellung getrennter Energiespeicher zu erhalten, die Speicherzustände der gegenwärtig getrennten Energiespeicher abzufragen, auf Grundlage der abgefragten Speicherzustände die gegenwärtig getrennten Energiespeicher einem oder mehreren Clustern zuzuordnen, und nach Maßgabe der Clusterzuordnung die Energiespeicher durch Schließen der Schaltschütze mittels der jeweiligen Energiespeichersteuerungen zuzuschalten.

Ein Energiespeicher kann als "getrennt" bezeichnet werden, wenn dessen Schaltschütz in der Offenstellung ist.

Jeder der Speicherzustände kann eine Leerlaufspannung des jeweiligen Energiespeichers angeben. Zumindest die gegenwärtig getrennten Energiespeicher können, vorzugsweise durch die Systemsteuerung, den Clustern abhängig von ihrer jeweiligen Leerlaufspannung zugeordnet werden.

Die einem der Cluster zugeordneten Energiespeicher können zugeschaltet werden, wenn die Spannung der Systemhochvoltschnittstelle mit einem durch die Leerlaufspannungen der Energiespeicher des Clusters definierten Bereich übereinstimmt.

Jeder der Speicherzustände kann ferner einen Innenwiderstand des jeweiligen Energiespeichers angeben. Die Systemsteuerung kann ferner dazu ausgebildet sein, zumindest für die gegenwärtig getrennten Energiespeicher auf Grundlage des jeweiligen Speicherzustands und einer Spannung der Systemhochvoltschnittstelle einen beim Zuschalten zu erwartenden Ausgleichstrom zu berechnen.

Jeder der Speicherzustände kann ferner einen Maximalstrom (auch: Stromgrenze) des jeweiligen Energiespeichers angeben. Die gegenwärtig getrennten Energiespeicher können nach Maßgabe der Clusterzuordnung zugeschaltet werden, falls der berechnete Ausgleichstrom kleiner als der Maximalstrom ist.

Der Maximalstrom kann eine maximale Varianz oder maximale Abweichung der Leerlaufspannungen der Energiespeicher bestimmen, die demselben Cluster zugeordnet werden.

Die Systemsteuerung des Traktionsenergiespeichersystems kann dazu ausgebildet sein, nur Energiespeicher miteinander parallel zu schalten, deren Differenz der Leerlaufspannung kleiner als ein bestimmter Grenzwert ist.

Die Systemsteuerung kann abhängig vom Maximalstrom und Speicherzustand eine maximale Abweichung der Leerlaufspannungen des zuzuschaltenden Energiespeichers von der Spannung der Systemhochvoltschnittstelle (auch: Systemspannung) des Traktionsenergiespeichersystems bestimmen. Das Zuschalten kann erfolgen, falls (z. B. sobald) eine gemessene Abweichung kleiner als die maximale Abweichung ist.

Die Systemsteuerung kann dazu ausgebildet sein, die Energiespeicher eines ersten Clusters zuzuschalten (z. B. bei Inbetriebnahme des Fahrzeugs), wobei ein Zwischenkreisspeicher mittels einem ersten Energiespeicher des ersten Clusters vorgeladen wird. Der erste Energiespeicher des ersten Clusters kann zugeschaltet werden nachdem der Zwischenkreisspeicher vorgeladen ist. Alle weiteren Energiespeicher des ersten Clusters können ohne das Vorladen zugeschaltet werden.

Die Energiespeicher eines Clusters (beispielsweise des ersten Clusters oder eines später zugeschalteten Clusters) können einer nach dem anderen zugeschaltet werden.

Da das Traktionsenergiespeichersystem sowohl als Reichweitenergänzung als auch als Leistungsergänzung anwendbar ist, kann durch das Zusammenschalten einer echten Teilmenge der Energiespeicher (beispielsweise des ersten Clusters) der Betrieb begonnen werden, beispielsweise zur Erfüllung einer fahrzeugseitigen Leistungsanforderung. Die Energiespeicher zur Ergänzung der Reichweite des Fahrzeugs werden spätestens benötigt, wenn der Ladezustand der anfänglich zusammengeschalteten Teilmenge erschöpft ist.

Die Systemsteuerung kann ferner dazu ausgebildet sein, die Energiespeicher eines zweiten Clusters zuzuschalten, deren berechnete Ausgleichströme nicht (z. B. nicht alle) kleiner als die Maximalströme sind, indem an das Fahrzeug ein steuerndes Systemsignal zum Laden oder Entladen des Traktionsenergiespeichersystems bis zu einem Sollwert der Systemspannung ausgegeben wird. Beim Erreichen des Sollwerts (z. B. bis auf die maximale Abweichung) kann der Energiespeicher des zweiten Clusters zugeschaltet werden.

Die Systemsteuerung kann den Sollwert auf Grundlage der Leerlaufspannungen des zweiten Clusters berechnet.

Die Systemsteuerung kann dazu ausgebildet sein, als den zweiten Cluster den Cluster zu wählen, dessen Leerlaufspannungen die kleinste Differenz zur Spannung der Systemhochvoltschnittstelle aufweisen.

Die Systemsteuerung kann dazu ausgebildet sein, das Zuschalten nach Maßgabe der Clusterzuordnung zu wiederholen bis alle Energiespeicher zugeschaltet sind.

Die Systemsteuerung kann ferner dazu ausgebildet sein, nach dem Zuschalten ein Systemsignal zur Bestätigung der Zuschaltung und/oder zur Angabe eines geänderten Verbindungstatus an das Fahrzeug auszugeben.

Das Erfassen der Zellzustände kann ein Messen der Zellzustände (beispielsweise durch die jeweiligen Speicherzellen), ein Bestimmen der Zellzustände (beispielsweise durch Berechnung mittels der Zellmodulsteuerung) und/oder ein Erhalten der Zellzustände (beispielsweise an der Zellmodulsteuerung) umfassen. Im Fall eines einzigen Zellmoduls in einem Energiespeicher kann die Funktionalität der Zellmodulsteuerung in der entsprechenden Energiespeichersteuerung integriert sein.

Jede Zellmodulsteuerung kann dazu ausgebildet sein, im Modulzustand die erfassten Zellzustände weiterzuleiten oder den Modulzustand aufgrund eines Minimums der erfassten Zellzustände zu bestimmen. Alternativ oder ergänzend kann jede Energiespeichersteuerung dazu ausgebildet sein, im Speicherzustand die erfassten Zellzustände weiterzuleiten oder aufgrund eines Minimums der Zellzustände oder eines Minimums des mindestens einen Modulzustands den Speicherzustand zu bestimmen. Die Energiespeichersteuerungen können jeweils das Minimum der Zellzustände bezogen auf den jeweiligen Energiespeicher bestimmen.

Die Systemsteuerung kann ferner dazu ausgebildet sein, eine Abweichung zwischen den Speicherzustände zu bestimmen. Abhängig von der Abweichung kann die Clusterzuordnung bestimmt oder wiederholt werden. Die Abweichung kann eine Varianz der Speicherzustände und/oder eine Differenz zwischen Minimum und Maximum der Speicherzustände umfassen, beispielsweise jeweils innerhalb eines oder aller zuvor bestimmten Cluster. Die Clusterzuordnung kann aktualisiert werden in Reaktion auf die einen Schwellwert überschreitende Abweichung.

Die Speicherzustände können auf Anfrage der Systemsteuerung bestimmt werden. Jede Energiespeichersteuerung kann ferner dazu ausgebildet sein, auf die Anfrage der Systemsteuerung den mindestens einen Modulzustand abzufragen.

Zumindest einer der Zellzustände, der Modulzustände, der Speicherzustände und/oder des Systemzustands kann eine Leerlaufspannung (auch als "Open-Circuit Voltage" oder OCV bezeichnet) und/oder einen Ladezustand (auch als "State of Charge" oder SoC bezeichnet) der jeweiligen Zelle, des jeweiligen Moduls, des jeweiligen Energiespeichers und/oder des Traktionsenergiespeichersystem angeben.

Jede Energiespeichersteuerung kann auf Basis der jeweiligen Zellzustände (beispielsweise Zellspannungen) einen Zell-Ladungszustand jeder Speicherzelle (beispielsweise durch Abgleich mit einer hinterlegten Kurve oder tabellierten Relation zwischen Leerlaufspannung und Ladezustand) bestimmen. Alternativ kann jede Zellmodulsteuerung die Zell-Ladezustände seiner Speicherzellen bestimmen und als Zellzustand ausgeben. Aus diesen Zell-Ladezuständen kann, z. B. durch Mittelwertbildung, ein Speicher-Ladezustand des jeweiligen Energiespeichers bestimmt werden (als der Speicherzustand). Jede Energiespeichersteuerung kann dazu ausgebildet sein, an die Systemsteuerung ein Minimum und/oder ein Maximum der Zellspannungen der Speicherzellen im jeweiligen Energiespeicher sowie den Speicher-Ladezustand auszugeben.

Die Systemsteuerung kann ferner dazu ausgebildet sein, Fahrzeuganweisungen vom Fahrzeug zu erhalten. Eine Einschaltanweisung kann einen Betriebszustand bewirken. Eine Abschaltanweisung kann einen Ruhezustand bewirken.

Das Fahrzeug kann ein Landfahrzeug, ein Wasserfahrzeug (beispielsweise ein Schiff oder Unterseeboot) oder ein Luftfahrzeug sein. Alternativ oder in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Die Zellmodule können in jedem Energiespeicher über Stromschienen elektrisch verbundene sein. Jeder Energiespeicher kann mindestens ein Schaltschütz umfassen. Die Energiespeichersteuerung kann das Schaltschütz oder die Schaltschütze steuern. In jedem Energiespeicher kann das Schaltschütz oder können die Schaltschütze dazu ausgebildet sein, die Stromschienen des Energiespeichers mit einer Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Beispielsweise können zwei Schaltschütze jeweils einen Pol der Stromschienen mit der Energiespeicherhochvoltschnittstelle verbinden und trennen.

Die Energiespeicherhochvoltschnittstellen (einzelner Energiespeicher oder in Gruppen seriell geschalteter Energiespeicher) können im Traktionsenergiespeichersystem parallel geschaltet sein. Die Systemsteuerung kann dazu ausgebildet sein, die Schließstellung der Schaltschütze einer steuerbaren Teilmenge der Energiespeicher für den Betriebszustand des Traktionsenergiespeichersystems zu bewirken, und/oder die Offenstellung der Schaltschütze aller Energiespeicher im Ruhezustand des Traktionsenergiespeichersystems zu bewirken.

Ferner können die Energiespeicher jeweils zum internen Ladungsaustausch zwischen den Zellmodulen des jeweiligen Energiespeichers ausgebildet sein, beispielsweise über die Stromschienen und/oder gesteuert durch die Energiespeichersteuerungen und Zellmodulsteuerungen. Die Zellmodule innerhalb jedes Energiespeichers können in Reihe oder parallel geschaltet sein.

Das Schaltschütz kann dazu ausgebildet sein, die Energiespeicherhochvoltschnittstelle des Energiespeichers in der Schließstellung mit den untereinander verschalteten Zellmodulen zu verbinden und in der Offenstellung von diesen zu trennen. Die Stromschienen jedes Energiespeichers können jeweils eine Minusschiene und eine gegenüber der Minusschiene potentialhöhere Plusschiene umfassen. Die Energiespeicherhochvoltschnittstellen können jeweils einen Minuspol und einen Pluspol umfassen. Die Stromschienen können in der Schließstellung mit der Energiespeicherhochvoltschnittstelle verbunden sein, indem die Plusschiene und die Minusschiene mit dem Pluspol bzw. dem Minuspol verbunden sind. Die Stromschienen können in der Offenstellung von der Energiespeicherhochvoltschnittstelle getrennt sein, indem die Plusschiene vom Pluspol getrennt ist, beispielsweise bei mit dem Minuspol verbundener Minusschiene.

Die parallel geschalteten Energiespeicherhochvoltschnittstellen können ferner zum Energieaustausch mit dem Fahrzeug verbunden sein. Ein Leistungsnetz (beispielsweise eine Hochvoltverteilungseinheit) des Fahrzeugs kann mit den parallel geschalteten Energiespeicherhochvoltschnittstellen verbunden sein. Der Energieaustausch kann auf den Betriebszustand beschränkt sein. Ein Stromfluss zwischen Traktionsenergiespeichersystem und dem Fahrzeug (beispielsweise einem Inverter des Fahrzeugs) kann im Ruhezustand unterbrochen sein. Das Leistungsnetz (beispielsweise die Hochvoltverteilungseinheit) des Fahrzeugs und/oder ein Systemschaltschütz des Traktionsenergiespeichersystem kann den Stromfluss im Ruhezustand unterbrechen.

Die Systemsteuerung kann ferner dazu ausgebildet sein, Signale von den Energiespeichersteuerungen zu erhalten. Die Signale können jeweils den Speicherzustand des jeweiligen Energiespeichers angeben.

Die Systemsteuerung kann ferner dazu ausgebildet sein, für eine Messphase die Offenstellung der Schaltschütze einzelner Energiespeicher zu bewirken. Die Messphase kann ein oder mehrere Zeitintervalle außerhalb des Betriebszustands umfassen. Die jeweilige Energiespeichersteuerung kann eine Leerlaufspannung (z. B. an den lastfreien Stromschienen) erfassen. Die erhaltenen Speicherzustände können auf einer in der Messphase gemessenen Leerlaufspannung des jeweiligen Energiespeichers basieren.

Der Speicherzustand kann den Ladezustand und/oder die Leerlaufspannung des jeweiligen Energiespeichers angeben. Alternativ oder ergänzend kann der Speicherzustand von einem zeitlichen Relaxationsverlauf der Leerlaufspannung (beispielsweise während der Messphase) abhängen. Alternativ oder ergänzend kann der Speicherzustand von einer Temperatur und/oder einer zeitlich integrierten Stromentnahme abhängen.

Die Systemsteuerung oder die jeweilige Energiespeichersteuerung kann dazu ausgebildet sein, den Speicherzustand regelmäßig (z. B. periodisch) zu überwachen. Die Systemsteuerung oder die jeweilige Energiespeichersteuerung kann ferner dazu ausgebildet sein, die Offenstellung der Schaltschütze der Energiespeicher zu bewirken, wenn einer der überwachten Speicherzustände fehlerhaft ist und/oder der überwachte Strom durch die Energiespeicherhochvoltschnittstelle größer als der Maximalstrom (auch: Stromgrenze) ist.

Die Systemsteuerung kann ferner dazu ausgebildet sein, Fahrzeuganweisungen (z. B. eine Datenabfrage oder eine Steuerungsanweisungen) vom Fahrzeug zu erhalten. Der Erhalt einer Einschaltanweisung kann den Betriebszustand einleiten. Der Erhalt einer Abschaltanweisung kann den Ruhezustand einleiten. Beispielsweise kann der Erhalt der Abschaltanweisung die Offenstellung der Schaltschütze aller Energiespeicher bewirken.

Das Traktionsenergiespeichersystem kann ferner eine Systemhochvoltschnittstelle und/oder ein Systemschaltschütz umfassen. Die Systemhochvoltschnittstelle ist mit dem Fahrzeug elektrisch verbunden oder verbindbar, beispielsweise mit einem Antriebsstrang des Fahrzeugs. Das Systemschaltschütz ist dazu ausgebildet, die parallel geschalteten Energiespeicherhochvoltschnittstellen mit der Systemhochvoltschnittstelle nach Vorgabe der Systemsteuerung (in einer Schließstellung des Systemschaltschützes) zu verbinden und (in einer Offenstellung des Systemschaltschützes) zu trennen. Die Systemsteuerung kann die Schließstellung des Systemschaltschützes im Betriebszustand und/oder die Offenstellung des Systemschaltschützes im Ruhezustand bewirken.

Jede der Zellmodulsteuerungen kann dazu ausgebildet sein, die Speicherzellen im jeweiligen Zellmodul betreffende Messwerte auszugeben. Jede der Energiespeichersteuerungen kann dazu ausgebildet sein, die Messwerte von den Zellmodulen im jeweiligen Energiespeicher zu erhalten und abhängig von den erhaltenen Messwerten ein Signal zu erzeugen. Die Systemsteuerung kann dazu ausgebildet sein, die Signale von den Energiespeichersteuerungen zu erhalten. Das Signal der Energiespeichersteuerung kann den jeweiligen Speicherzustand angeben.

Eine der Energiespeichersteuerungen kann die Funktion der Systemsteuerung ausführen. Diese eine Energiespeichersteuerung kann auch als Master-Energiespeichersteuerung bezeichnet werden. Jede weitere Energiespeichersteuerung des Traktionsenergiespeichersystems kann auch als Slave-Energiespeichersteuerung bezeichnet werden.

Die Funktion der Systemsteuerung kann in jeder der Energiespeichersteuerungen implementiert sein und in einer der Energiespeichersteuerungen zur Ausführung aktiviert sein. Die Funktion der Systemsteuerung kann in nur einer der Energiespeichersteuerungen zur Ausführung aktiviert sein. In allen anderen Energiespeichersteuerungen kann die Funktion der Systemsteuerung deaktiviert sein. Jede der Energiespeichersteuerungen kann dazu ausgebildet sein, in einem ersten Energiespeicherbetriebszustand die Funktion auszuführen und in einem zweiten Energiespeicherbetriebszustand die Funktion nicht auszuführen.

Jeder der Energiespeicher kann ferner eine erste Datenschnittstelle und eine von der ersten Datenschnittstelle verschiedene zweite Datenschnittstelle umfassen. Die Datenschnittstellen können jeweils innerhalb des Energiespeichers mit der Energiespeichersteuerung verbunden sein.

Bei jenen Energiespeichern, welche nicht die Funktion der Systemsteuerung ausführen, kann die erste Datenschnittstelle außerhalb des Energiespeichers unverbunden sein oder entfallen. Alternativ oder ergänzend kann bei jenen Energiespeichern die zweite Datenschnittstelle zur Ausgabe des Signals mit der zweiten Datenschnittstelle des Energiespeichers verbunden sein, welcher die Funktion der Systemsteuerung ausführt.

Bei jenem Energiespeicher, welcher die Funktion der Systemsteuerung ausführt, kann die erste Datenschnittstelle außerhalb des Energiespeichers mit dem Fahrzeug verbunden sein zur Ausgabe eines Systemsignals. Alternativ oder ergänzend kann die zweite Datenschnittstelle jenes Energiespeichers zum Erhalt der Signale mit den zweiten Datenschnittstellen der Energiespeicher verbunden sein, welche nicht die Funktion der Systemsteuerung ausführen. Die zweiten Datenschnittstellen aller Energiespeicher können an einen gemeinsamen Datenbus angeschlossen sein.

Die Systemsteuerung kann dazu ausgebildet sein, die erhaltenen Signale zum Systemsignal zu aggregieren und das aggregierte Systemsignal auszugeben, z. B. im Betriebszustand des Traktionsenergiespeichersystems.

Die Aggregation der mehreren Signale zu einem Systemsignal durch die Systemsteuerung kann eine einheitliche Signalausgabe (oder Kommunikation) gegenüber dem Fahrzeug ermöglichen. Beispielsweise können verschiedene Fahrzeugderivate und/oder Fahrzeuge mit unterschiedlichen Elektrifizierungsgraden des Antriebsstrangs eine einheitliche Kommunikationsschnittstelle zum Traktionsenergiespeichersystem nutzen.

Ein Aufbau der fahrzeugseitigen Kommunikationsschnittstelle und ein Protokoll der fahrzeugseitigen Kommunikation des Traktionsenergiespeichersystems können für verschiedenen Anwendungsfällen gleich sein. Die Anwendungsfälle können sich hinsichtlich Anzahl und Verschaltung der Energiespeicher unterscheiden. Die Anzahl und die Verschaltung der Energiespeicher kann an einen Energie- und Leistungsbedarf des Fahrzeugs angepasst werden, beispielsweise ohne die fahrzeugseitige Kommunikation anzupassen.

Das hierarchisch strukturierte Traktionsenergiespeichersystem mit Energiespeichern auf einer Hierarchieebene und Zellmodulen auf einer darunterliegenden Hierarchieebene kann einen Ladungsaustausch ermöglichen, dessen Zeitdauer nicht oder nicht linear mit der Anzahl der Speicherzellen oder der Zellmodule zunimmt. Beispielsweise kann jede Energiespeichersteuerung dazu ausgebildet sein, auf Grundlage der von den Zellmodulsteuerungen erhaltenen Messwerte einen ersten Ladungsaustausch zwischen den Speicherzellen und/oder den Zellmodulen zu bewirken. Ferner kann der hierarchische Aufbau die Wartung und/oder die Reparatur vereinfachen. Beispielsweise kann das Systemsignal eine Meldung enthalten. Die Meldung kann eine Fehlermeldung, Warnmeldung oder Diagnosemeldung sein.

Die Diagnosemeldung kann aufgrund der von den einzelnen Energiespeichern erhaltenen Signale einen einzelnen Energiespeicher angeben. Beispielsweise kann einer der Energiespeicher als fehlerhaften oder gealtert angegeben sein. Ferner kann die Diagnosemeldung aufgrund zellmodul-spezifischer Messwerte ein einzelnes Zellmodul (beispielsweise als fehlerhaft oder gealtert) angeben. Dies ist vorteilhaft, falls eine nutzbare Leistung des Traktionsenergiespeichersystems vom leistungsschwächsten Energiespeicher oder Zellmodul abhängt. Durch einen gezielten Austausch des angegebenen Energiespeichers oder Zellmoduls kann die Leistungsfähigkeit des Traktionsenergiespeichersystem zeit- und kosteneffektiv wiederhergestellt werden.

Die Energiespeichersteuerung jedes Energiespeichers kann mit den jeweiligen Zellmodulsteuerungen desselben Energiespeichers zum Datenaustausch verbunden sein, beispielsweise über einen seriellen Datenbus. Die Messwerte können eine Spannung (z. B., eine Modulspannung aller Speicherzellen) und/oder eine Temperatur (z. B. eine Modultemperatur, einen Temperaturmittelwert oder ein Temperaturmaximum) der Zellmodule angeben.

Jede Zellmodulsteuerung kann dazu ausgebildet sein, die Messwerte zu erfassen und/oder an die jeweils verbundene Energiespeichersteuerung auszugeben. Die Zellmodulsteuerung kann an zumindest einer der jeweiligen Speicherzellen angrenzend oder anliegend angeordnet sein. Sensoren zur Erfassung der Messwerte können in der Zellmodulsteuerung angeordnet sein.

Jede Energiespeichersteuerung kann dazu ausgebildet sein, auf Grundlage der von den jeweiligen Zellmodulen erhaltenen Messwerte, das Signal zu erzeugen. Alternativ oder ergänzend kann die Energiespeichersteuerung dazu ausgebildet sein, weitere Messwerte zu erfassen (z. B. die Leerlaufspannung des Energiespeichers oder einen vom Energiespeicher abgegebenen Strom), und auf deren Grundlage das Signal (z. B. zur Angabe des Speicherzustands) zu erzeugen.

Die Signale und/oder das Systemsignal können einen Messwert, einen Zustandswert oder einen Diagnosewert angeben. Das Aggregieren der Signale zum Systemsignal (auch: Aggregationsregel) kann eine Mittelwertbildung, eine Minimumbestimmung und/oder eine Maximumbestimmung umfassen.

Die Systemsteuerung kann zur bidirektionalen Kommunikation mit dem Fahrzeug ausgebildet sein. Die Systemsteuerung kann dazu ausgebildet sein, ein Fahrzeugsignal zu erhalten. Die Systemsteuerung kann das Fahrzeugsignal analysieren und abhängig von der Analyse ein Steuersignal an mindestens eine der Energiespeichersteuerungen ausgeben. Das Fahrzeugsignal kann eine Steuerungsanweisung (z. B. die Fahrzeuganweisung) und/oder eine Zustandsabfrage umfassen.

Die Systemsteuerung kann dazu ausgebildet sein, über die erste Datenschnittstelle ein Notabschaltsignal vom Fahrzeug zu erhalten. Die Systemsteuerung kann ferner dazu ausgebildet sein, beim Erhalt des Notabschaltsignals ein Steuersignal zur Trennung der Schaltschütze an die Energiespeichersteuerungen zu senden.

Die Signale können den Speicherzustand des jeweiligen Energiespeichers angeben (der auch als Energiespeicherzustand bezeichnet werden kann). Das aggregierte Systemsignal kann einen Systemzustand des Traktionsenergiespeichersystems angeben. Ein Datenformat zur Angabe des Zustands, eine physikalische Definition der jeweils genutzten Datenschnittstelle und/oder ein Kommunikationsprotokoll kann für die Signale und das aggregierte Systemsignal übereinstimmend sein.

Der Speicherzustand und der Systemzustand können einen gegenwärtigen Zustand des jeweiligen Energiespeichers bzw. des Traktionsenergiespeichersystems angeben. Alternativ oder ergänzend können der Speicherzustand und der Systemzustand eine (z. B. prognostizierte) Leistungsfähigkeit des jeweiligen Energiespeichers bzw. des Traktionsenergiespeichersystems angeben. Die Signale der Energiespeichersteuerungen können einen gegenwärtigen Ladezustand und/oder einen (z. B. zukünftig entnehmbaren) Maximalstrom des jeweiligen Energiespeichers angeben. Der Ladezustand kann, beispielsweise mittels einer tabellierten Entladekurve, aus der gemessenen Spannung (z. B. der Leerlaufspannung) bestimmt werden.

Der Maximalstrom (beispielsweise für Laden und/oder Entladen) kann, beispielsweise mittels einer tabellierten Funktion, aus dem Ladezustand und/oder der gemessenen Temperatur bestimmt werden. Jede die Funktion der Systemsteuerung nicht ausführende Energiespeichersteuerung kann ein eigenes Signal (z. B. mit einem eigenen Datensatz und/oder mittels eines eigenen Datagramms) an die die Funktion der Systemsteuerung ausführende Energiespeichersteuerung ausgeben.

Die Energiespeichersteuerungen können jeweils dazu ausgebildet sein, den Speicherzustand des jeweiligen Energiespeichers festzustellen auf Grundlage der von den Zellmodulen erhaltenen Messwerte und/oder den weiteren Messwerten. Die Energiespeichersteuerung kann ferner dazu ausgebildet sein, bei Feststellung eines unzulässigen Speicherzustands das jeweilige Schaltschütz oder die jeweiligen Schaltschütze zu trennen und/oder eine Fehlermeldung als das Signal zu erzeugen und an die Systemsteuerung auszugeben. Das Signal der betreffenden Energiespeichersteuerung kann den unzulässigen Speicherzustand benennen und/oder die Unzulässigkeit als solche angeben.

Die Feststellung des Speicherzustands kann ein Messen des durch den jeweiligen Energiespeicher abgegebenen oder aufgenommenen Stroms umfassen. Der unzulässige Speicherzustand kann bei Überschreiten des Maximalstroms (beispielsweise für das Laden bzw. Entladen) festgestellt werden. Alternativ oder ergänzend können die Signale jeweils den entnehmbaren Maximalstrom des jeweiligen Energiespeichers angeben. Das aggregierte Systemsignal kann das n-Fache des Kleinsten der signalisierten entnehmbaren Maximalströme angeben. Der Faktor n kann die Anzahl der zusammengeschalteten Energiespeicher sein.

Die Feststellung des Speicherzustands kann ein Bestimmen des Ladezustands des jeweiligen Energiespeichers oder einer dem jeweiligen Energiespeicher entnehmbaren Ladung umfassen. Der unzulässige Speicherzustand kann bei Unterschreiten einer Mindestladung festgestellt werden. Die erzeugten Signale können jeweils den Ladezustand oder die entnehmbare Ladung des jeweiligen Energiespeichers angeben. Der Systemzustand kann die Summe der signalisierten entnehmbaren Ladungen angeben.

Die entnehmbare Ladung kann durch zeitliche Integration des Stroms bestimmt werden. Alternativ oder ergänzend kann die entnehmbare Ladung aufgrund der gemessenen Spannung mittels einer tabellierten Funktion bestimmt werden.

Jeder der Energiespeicher kann in einem eigenen Gehäuse angeordnet sein. In einer oder mehreren Außenflächen des Gehäuses kann mindestens eines der folgenden Merkmale angeordnet sein: die erste Datenschnittstelle, die zweite Datenschnittstelle und die Energiespeicherhochvoltschnittstelle.

Gemäß weiteren Aspekten sind ein Fahrzeug, beispielsweise ein Nutzfahrzeug, mit einem solchen Traktionsenergiespeichersystem und ein Verfahren zur Herstellung eines Fahrzeugs mit dem Einbau eines solchen Traktionsenergiespeichersystems bereitgestellt.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:

Figur 1    ein schematisches Blockschaltbild eines ersten Ausführungsbeispiels eines Traktionsenergiespeichersystems für ein Fahrzeug;

Figur 2    ein schematisches Blockschaltbild eines zweiten Ausführungsbeispiels eines Traktionsenergiespeichersystems für ein Fahrzeug;

Figur 3    ein schematisches Blockschaltbild eines dritten Ausführungsbeispiels eines Traktionsenergiespeichersystems für ein Fahrzeug;

Figur 4    ein funktionales Blockdiagramm einer beispielhaften Signalverarbeitung im Traktionsenergiespeichersystem, die in den Ausführungsbeispielen der Figuren 1 bis 3 implementierbar ist;

Figur 5    zeigt ein funktionales Blockschaltbild eines Beispiels einer Zuschaltfunktion, die in jedem der Ausführungsbeispiele der Figuren 1 bis 3 oder der Signalverarbeitung der Figur 4 implementierbar ist;

Figur 6    zeigt schematisch ein Beispiel eines zeitlichen Verlaufs einer Systemspannung des Traktionsenergiespeichersystems für die Zuschaltfunktion;

Figur 7    zeigt schematisch eine Stromverteilungsberechnung zum Berechnen von Ausgleichsströmen, die in jedem der Ausführungsbeispiele der Figuren 1 bis 3 oder der Signalverarbeitung der Figur 4 implementierbar ist; und

Figur 8    zeigt schematisch eine Stromverteilungsberechnung zum Berechnen von aggregierten Stromgrenzen, die in jedem der Ausführungsbeispiele der Figuren 1 bis 3 oder der Signalverarbeitung der Figur 4 implementierbar ist.

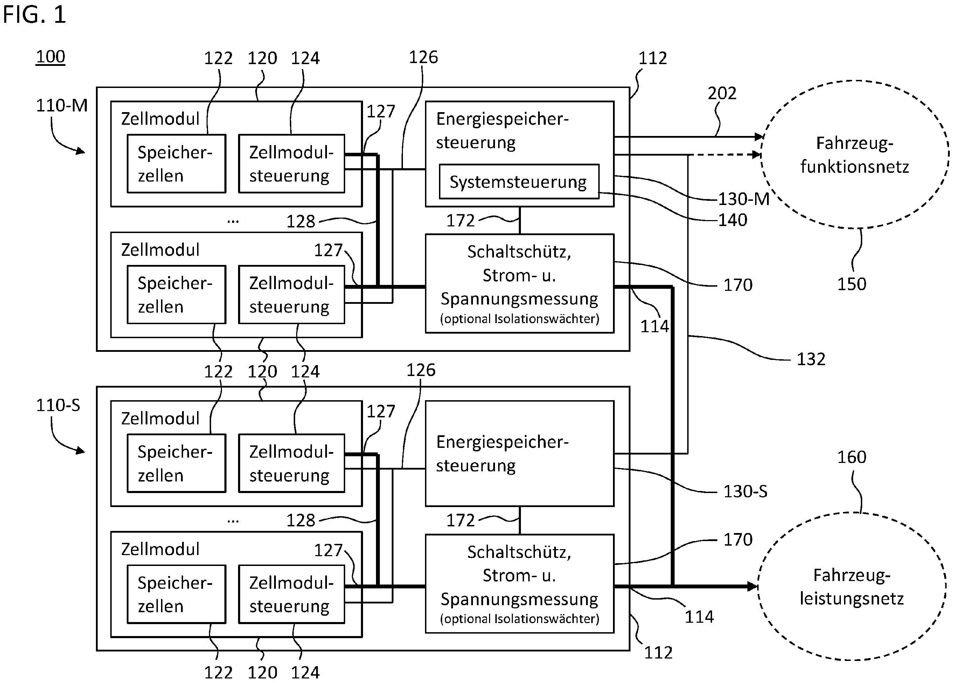

Figur 1 zeigt ein schematisches Blockschaltbild eines allgemein mit Bezugszeichen 100 bezeichneten Traktionsenergiespeichersystems (TES-Systems) für ein Fahrzeug, beispielsweise ein Nutzfahrzeug. Das TES-System 100 umfasst mindestens zwei Energiespeicher 110. Jeder Energiespeicher 110 umfasst jeweils mehrere Zellmodule 120 und eine Energiespeichersteuerung 130.

Jedes der Zellmodule 120 umfasst mehrere Speicherzellen 122 und eine Zellmodulsteuerung 124. Jede Zellmodulsteuerung 124 erfasst Messwerte betreffend die jeweils zugeordneten Speicherzellen 122. Zum Beispiel erfasst die Zellmodulsteuerung 124 eine Spannung und/oder eine Temperatur der Speicherzellen 122 im jeweiligen Zellmodul 120. Jede der Zellmodulsteuerungen 124 ist dazu ausgebildet, die Messwerte auf einem internen Datenbus 126 auszugeben. Der interne Datenbus 126 des Zellmoduls 120 kann ein serieller Bus, beispielsweise für ein Controller Area Network (CAN), sein.

Jede der Energiespeichersteuerungen 130 ist dazu ausgebildet, die Messwerte von den Zellmodulen 120 im jeweiligen Energiespeicher 110 zu erhalten. Hierzu ist jede Energiespeichersteuerung 110 mit dem jeweiligen internen Datenbus 126 verbunden.

Jede der Energiespeichersteuerungen 130 ist ferner dazu ausgebildet, abhängig von den erhaltenen Messwerten ein Signal zu erzeugen. Zur Ausgabe des Signals oder anderer Signale ist die Energiespeichersteuerung 130 mit einem externen Datenbus 132 verbunden. Der externe Datenbus 132 des TES-Systems 100 kann ein serieller Bus sein, beispielsweise ein weiterer CAN-Bus. Der externen Datenbus 132 kann ausschließlich zur Kommunikation zwischen den Energiespeichern 110 (bzw. deren Energiespeichersteuerungen 130) ausgebildet sein.

Die Energiespeicher 110 sind jeweils in einem eigenen Gehäuse 112 angeordnet. Der interne Datenbus 126 verläuft innerhalb des jeweiligen Gehäuses 112. Der externe Datenbus 132 verläuft außerhalb der Gehäuse 112.

Das TES-System 100 umfasst ferner eine Systemsteuerung 140. Die Systemsteuerung 140 kann dazu ausgebildet sein, Signale von den Energiespeichersteuerungen 130 zu erhalten, auf Grundlage der erhaltenen Signale ein Systemsignal zu erzeugen und das Systemsignal an ein Funktionsnetz 150 des Fahrzeugs auszugeben. Das Funktionsnetz 150 kann ein Niederspannungsbordnetz und/oder ein Bussystem zur Kommunikation zwischen Fahrzeugfunktionen umfassen. Das Niederspannungsbordnetz kann eine Versorgungsspannung von 24 Volt bereitstellen.

In einer ersten Variante kann der externen Datenbus 132 ausschließlich zur Kommunikation zwischen den Energiespeichern 110 (bzw. deren Energiespeichersteuerungen 130) ausgebildet sein. Das Funktionsnetz 150 kann über eine eigene Schnittstelle und/oder eine eigene Busanbindung 202 mit der Systemsteuerung 140 verbunden sein. Hierzu kann ein eigener Bus (beispielsweise ein eigener CAN-Bus) zur Fahrzeugkommunikation vorgesehen sein, der unabhängig vom externen Datenbus 132 arbeitet.

In einer zweiten Variante kann der externe Datenbus 132 (z. B. anstatt der separaten Busanbindung 202 oder ergänzend hierzu) mit dem Funktionsnetz 150 verbunden sein (gestrichelter Pfeil).

In beiden Varianten kann das TES-System 100 eine einheitliche Fahrzeugschnittstelle zum Funktionsnetz 150 des Fahrzeugs umfassen, die unabhängig von der Anzahl der eingesetzten und miteinander verbundenen Energiespeicher 110 ist. Insbesondere bei der ersten Variante kann die Fahrzeugschnittstelle auf eine physischen Ebene (z. B. hinsichtlich Steckverbindung und/oder Signalverlauf) oder einer Bitübertragungsschicht (z. B. hinsichtlich eines Kommunikationsprotokolls) unabhängig von einer veränderlichen Zusammensetzung der vom TES-System 100 umfassten Energiespeicher 110 sein.

Die Systemsteuerung 140 kann in einem Energiespeicher 110, beispielsweise in einer der Energiespeichersteuerungen 130, implementiert sein. Alternativ oder ergänzend kann die Systemsteuerung 140 außerhalb der Energiespeicher 110 implementiert sein, beispielsweise als eine eigene Vorrichtung in einem separaten Gehäuse oder eine Komponente des Funktionsnetzes 150. Ein Energiespeicher 110, welcher die Funktion der Systemsteuerung 140 ausführt, wird auch als Master-Energiespeicher 110-M bezeichnet. Der oder die Energiespeicher 110, welche nicht die Funktion der Systemsteuerung 140 ausführen, werden auch als Slave-Energiespeicher 110-S bezeichnet. Entsprechende Bezeichnungen gelten für die jeweiligen Energiespeichersteuerungen 130-M bzw. 130-S.

Die Systemsteuerung 140 kann dazu ausgebildet sein, die Signale von den Energiespeichersteuerungen 130-S über den externen Datenbus 132 zu erhalten. Das Systemsignal kann von der Systemsteuerung 140 an das Funktionsnetz 150 über einen direkten Anschluss (beispielsweise den Bus 202) der Systemsteuerung 140 an das Funktionsnetz 150 ausgegeben werden. Alternativ oder ergänzend, kann das Systemsignal an das Funktionsnetz 150 über den externen Datenbus 132 ausgegeben werden. Hierzu ist das Funktionsnetz 150 (beispielsweise direkt oder über ein Gateway) an den externen Datenbus 132 angeschlossen.

Die Speicherzellen 122 eines Zellmoduls 120 sind (beispielsweise in Reihe) zusammengeschalten. Die aus der Zusammenschaltung resultierenden Anschlussklemmen 127 sind über Stromschienen 128 verbunden. Die Stromschienen 128 können aus Aluminium oder einem anderen leitenden Material gefertigt sein.

Die aus dem Verbund der Zellmodule 120 jedes Energiespeichers 110 resultierenden Pole bilden eine Energiespeicherhochvoltschnittstelle 114 (nachfolgend: Hochvoltschnittstelle). Die Hochvoltschnittstellen 114 können parallel oder in Reihe verschaltet sein und mit einem Leistungsnetz 160 des Fahrzeugs verbunden oder verbindbar sein. Das Leistungsnetz 160 kann ein Hochvoltbordnetz des Fahrzeugs umfassen. Ein Antriebsstrang des Fahrzeugs kann mit dem Leistungsnetz 160 verbunden sein zur Entnahme der im TES-System 100 gespeicherten Energie und/oder zum Laden des TES-Systems 100, beispielsweise bei einem rekuperativen Bremsvorgang. Der Antriebsstrang kann einen Kurbelwellen-Startergenerator oder eine elektrische Maschine als primärer Antrieb (ggf. angeschlossen über einen Inverter) umfassen. Das Leistungsnetz 160 kann auch als Traktionsnetz bezeichnet werden. Das Leistungsnetz 160 kann eine Spannung von mindestens 60 Volt, beispielsweise zwischen 540 Volt und 738 Volt, bereitstellen. Alternativ oder ergänzend kann das Leistungsnetz 160 jedes Hochvolt-Bordnetz im Sinne des Fahrzeugbaus sein. Eine Topologie des Leistungsnetzes 160 und/oder dessen Komponenten können das Leistungsnetz 160 gegenüber einem Niedervoltnetz (von beispielsweise 24 Volt, insbesondere dem Niederspannungsbordnetz) abgrenzen. Die Topologie kann einer bekannten Fahrzeugtopologie für Hybrid-, Plug-In- oder Elektrofahrzeuge entsprechen oder angepasst sein. Die Komponenten können einen Umrichter (beispielsweise den Inverter oder Wechselrichter) für Fahrantriebe, das TES-System 100, eine oder mehrere elektrische Maschinen, Nebenaggregate und/oder einen Kabelbaum umfassen.

Vorzugsweise ist in jedem Energiespeicher 110 mindestens ein Schaltschütz 170 zwischen den Zellmodulen 120 und dem Leistungsnetz 160 angeordnet. Das Schaltschütz 170 wird beziehungsweise die Schaltschütze 170 werden von der Energiespeichersteuerung 130 im gleichen Energiespeicher 110 über die mit Bezugszeichen 172 gezeigte Steuerleitung zum wahlweisen Trennen des jeweiligen Energiespeichers 110 vom Leistungsnetz 160 gesteuert. Das Schaltschütz 170 kann Teil einer Schützbox sein, die ferner die elektrische Isolation der Stromschienen 128 (z. B. gegenüber einem Referenzpotential) überwacht, den über die Stromschienen 128 fließenden Strom misst und/oder die an den Stromschienen 128 anliegende Spannung misst (beispielsweise bei geöffnetem Schaltschütz die Leerlaufspannung).

In einem Betriebszustand des TES-Systems 100 können die Schaltschütze 170 der zugeschalteten (und ggf. funktionsfähigen) Energiespeicher 110 geschlossen sein (Schließstellung). Durch Öffnen des Schaltschützes 170 oder der Schaltschütze 170 (Offenstellung) kann der entsprechende Energiespeicher 110 im Betriebszustand des TES-Systems 100 aus dem Verbund des TES-Systems 100 isoliert werden, beispielsweise bei einem unzulässigen Speicherzustand oder zur Messung der Leerlaufspannung. Vermittels der jeweiligen Energiespeichersteuerung 130 kann die Systemsteuerung 140 in einem Ruhezustand des TES-Systems 100 die Offenstellung der Schaltschütze 170 aller Energiespeicher 110 bewirken.

Weiterhin kann ein Vorladeschaltschütz (oder kurz: Vorladeschütz) und ein mit dem Vorladeschaltschütz in Reihe geschalteter Vorladewiderstand in jedem Energiespeicher 110 parallel zu einem der Schaltschütze 170 (die auch als Hauptschütze bezeichnet werden können) verbaut sein. Der Vorladewiderstand kann ein Kaltleiter oder PTC-Widerstand sein. Unmittelbar vor der Schließstellung (z. B. für den Betriebszustand) kann die Energiespeichersteuerung 130 den Vorladeschaltschütz schließen. Die Energiespeichersteuerung 130 kann die Schließstellung der Schaltschütze 170 bewirken, sobald einen Spannungsdifferenz am Vorladewiderstand einen Schwellwert unterschreitet.

Die Systemsteuerung 140 ist ferner zur bidirektionalen Kommunikation mit dem Funktionsnetz 150 des Fahrzeugs ausgebildet. Beispielsweise können die Systemsignale in Reaktion auf ein Fahrzeugsignal (vom Funktionsnetz 150 des Fahrzeugs) erzeugt und ausgegeben werden. Ferner kann das Fahrzeugsignal eine Steuerungsanweisung umfassen. Die Systemsteuerung 140 analysiert die Steuerungsanweisung zur Bestimmung derjenigen Energiespeicher 110, die zur Umsetzung der Steuerungsanweisung relevant sind, und gibt ein Steuersignal an die Energiespeichersteuerungen 130 der betreffenden Energiespeicher 110 aus.

Das TES-System 100 kann durch den modularen Aufbau auf der Ebene der Energiespeicher 110 skalierbar eingesetzt werden. Die Energiespeicher 110 sind mehrfach parallel oder seriell verschaltbar. Durch Verschaltung und Anzahl der verschalteten Energiespeicher 110 ist das TES-System 100 für eine Fahrzeug-spezifische Leistungs- und Energieanforderung ausgestaltbar. Diese Anforderungen können vom Grad der Elektrifizierung des Antriebsstrangs des Fahrzeugs abhängen. Ferner kann die Leistungsanforderung durch eine Transportleistung des Fahrzeugs, beispielsweise des Nutzfahrzeugs, und die Energieanforderung durch eine Reichweite des Fahrzeugs bestimmt sein. Durch das Zuschalten mittels der Schaltschütze 170 kann die Verschaltung und/oder die Anzahl der verschalteten Energiespeicher 110 im Betriebszustand veränderbar sein, beispielsweise steuerbar durch das Fahrzeugsignal.

Vorzugsweise stell die Systemsteuerung 140 hinsichtlich einer physischen Schnittstelle und eines Kommunikationsprotokolls eine einheitliche Datenschnittstelle zum Fahrzeug bereit, die unabhängig von der Fahrzeug-spezifischen Ausgestaltung des TES-Systems 100 sein kann. Die mehreren Energiespeicher 110 können sich aufgrund der Kommunikation über die Systemsteuerung 140 gegenüber dem Fahrzeug wie ein entsprechend großer Energiespeicher verhalten. Dadurch wird ein Fahrzeug-spezifischer Integrationsaufwand minimiert.

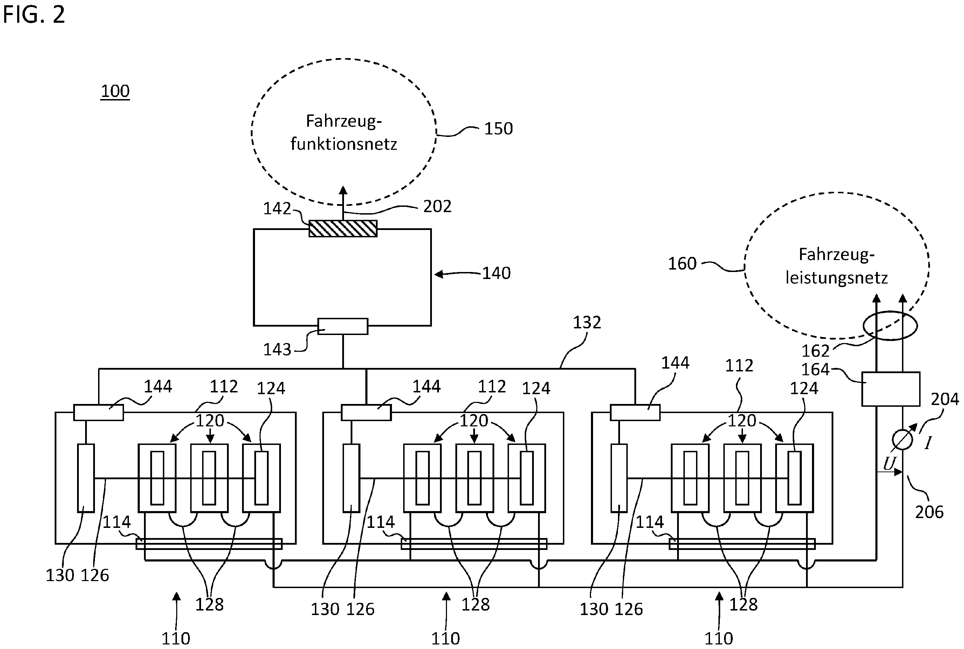

Figur 2 zeigt ein schematisches Blockschaltbild eines zweiten Ausführungsbeispiels eines TES-Systems 100, dessen Merkmale mit dem ersten Ausführungsbeispiel der Figur 1 kombinierbar sind. Mit den anderen Ausführungsbeispielen übereinstimmende Bezugszeichen bezeichnen entsprechende oder identische Merkmale.

Die Systemsteuerung 140 ist außerhalb der Gehäuse 112 der Energiespeicher 110 angeordnet. Die Systemsteuerung 140 umfasst eine erste Datenschnittstelle 142 für die fahrzeugseitige Kommunikation. Beispielsweise ist die erste Datenschnittstelle 142 mit dem Funktionsnetz 150 und/oder einer Motorsteuerung verbunden. Ferner umfasst die Systemsteuerung 140 eine zweite Datenschnittstelle 143, die über den externen Datenbus 132 mit Datenschnittstellen 144 der Energiespeicher 110 verbunden ist. Die Systemsteuerung 140 erhält die Signale der einzelnen Energiespeicher 110 über die zweite Datenschnittstelle 143. Das Systemsignal wird über die erste Datenschnittstelle 142 ausgegeben.

Die Hochvoltschnittstellen 114 der einzelnen Energiespeicher 110 sind parallel verschaltet und an das Leistungsnetz 160 und/oder den Inverter angeschlossen. In jedem Ausführungsbeispiel kann eine Systemhochvoltschnittstelle 162 zum Energieaustausch zwischen dem TES-System 100 und dem Leistungsnetz 160 des Fahrzeugs vorgesehen sein.

Der Strom I durch die Systemhochvoltschnittstelle 162 wird als Systemstrom 204 bezeichnet. Die einheitliche Spannung U der Parallelschaltung liegt an der Systemhochvoltschnittstelle 162 an und wird als Systemspannung 206 bezeichnet. Aufgrund der Parallelschaltung kann der Systemstrom 204 auch als Gesamtstrom des TES-Systems 100 bezeichnet werden.

Ein von der Systemsteuerung 140 gesteuertes Systemschaltschütz 164 ermöglicht, die Systemhochvoltschnittstelle 162 spannungsfrei zu schalten. Alternativ kann das Systemschaltschütz 164 in einer Hochvoltverteilungseinheit des Leistungsnetzes 160 angeordnet sein. In diesem Fall kann das Systemschaltschütz 164 direkt (beispielsweise über den externen Datenbus 132) oder mittelbar (beispielsweise über eine Komponente des Funktionsnetzes 150) von der Systemsteuerung 140 gesteuert werden.

Die erste Datenschnittstelle 142 ist an einen seriellen Bus 202 des Fahrzeugfunktionsnetzes 150, beispielsweise einen vom TES-System 100 unabhängigen CAN-Bus, angeschlossen.

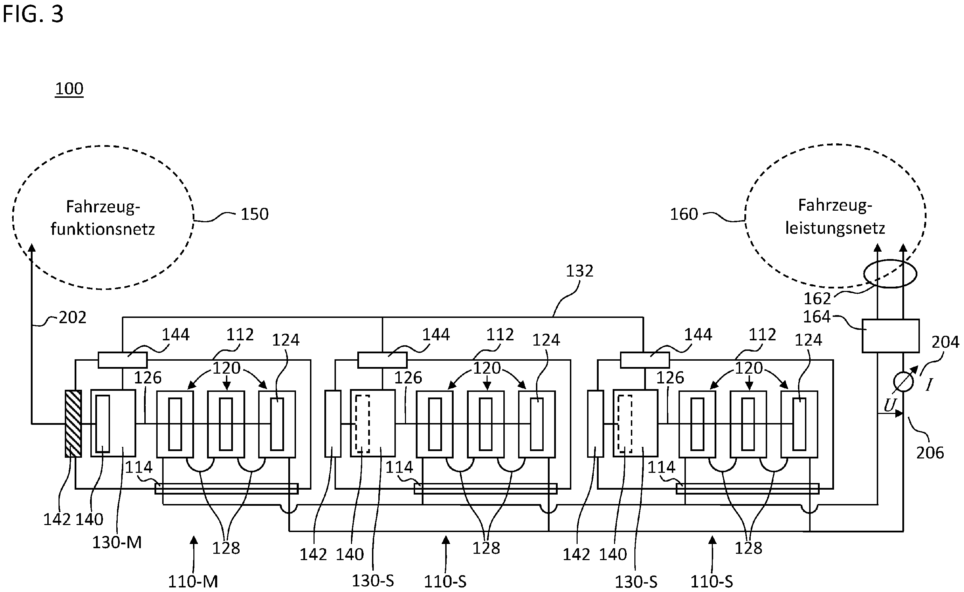

Figur 3 zeigt ein schematisches Blockschaltbild eines dritten Ausführungsbeispiels eines TES-Systems 100 für ein Fahrzeug. Das dritte Ausführungsbeispiel unterscheidet sich vom zweiten Ausführungsbeispiel dadurch, dass die Funktion der Systemsteuerung 140 in einem Energiespeicher 110-M der Energiespeicher 110 ausgeführt wird. Hierzu umfasst der Energiespeicher 110-M die erste Datenschnittstelle 142. Über eine zweite Datenschnittstelle 144 erhält der Energiespeicher 110-M die Signale der anderen Energiespeicher 110-S, die nicht die Funktion der Systemsteuerung 140 ausführen. Die erste Datenschnittstelle 142 und die zweite Datenschnittstelle 144 sind jeweils im Energiespeicher 110-M mit der Energiespeichersteuerung 130-M verbunden, die die Funktion der Systemsteuerung 140 ausführt.

Alle Energiespeicher 110-M und 110-S (oder zumindest deren Energiespeichersteuerungen 130-M bzw. 130-S) sind vorzugsweise baugleich. Auch die Energiespeicher 110-S können eine erste Datenschnittstelle 142 umfassen, die außerhalb des Energiespeichers 110-S unverbunden ist. Die zweiten Datenschnittstellen 144 aller Energiespeicher 110-M und 110-S sind über den externen Datenbus 132 verbunden.

In einer bevorzugten Ausgestaltung ist die Funktion der Systemsteuerung 140 auch in jeder Energiespeichersteuerung 130-S der Energiespeicher 110-S implementiert und nicht zur Ausführung aktiviert (gezeigt als gestrichelter Funktionsblock in Figur 3). Durch Setzen eines oder mehrerer Parameter der Energiespeichersteuerung 130 kann die Funktion der Systemsteuerung 140 wahlweise zur Ausführung aktiviert und deaktiviert werden.

Die in den Figuren 2 und 3 gezeigte Parallelschaltung der drei Hochvoltschnittstellen 114 ist beispielhaft. Abhängig von den Anforderungen des Fahrzeugleistungsnetzes 160 (z. B. hinsichtlich Strom, Spannung, Leistung und/oder Energie) kann eine größere Anzahl an Energiespeichern 110 und/oder eine andere Verschaltung der Hochvoltschnittstellen 114 eingesetzt werden. Insbesondere können die Hochvoltschnittstellen 114 innerhalb jeweils einer Gruppe von Energiespeichern 110 in Reihe geschaltet sein, und die Gruppen untereinander parallel geschaltet sein.

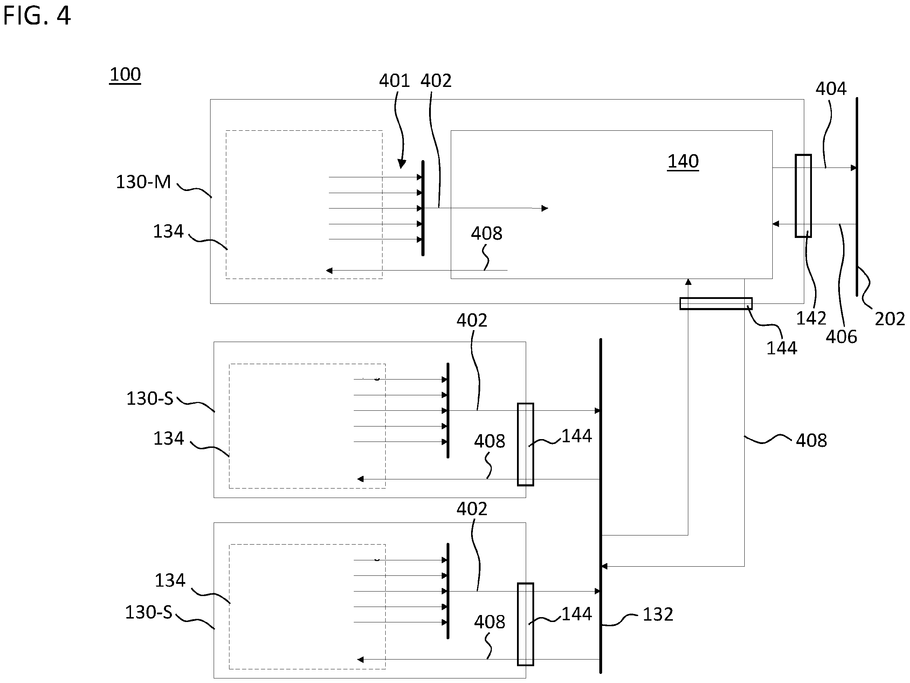

Figur 4 zeigt ein funktionales Blockdiagramm des TES-Systems 100, dessen funktionale Merkmale optional in jedem der vorgenannten Ausführungsbeispiele implementiert sind. Die funktionalen Merkmale können zumindest teilweise durch einen anwendungsspezifischen integrierten Schaltkreis (ASIC) implementiert sein und/oder in einem Speicher kodiert sein, auf den ein Prozessor zur Ausführung der funktionalen Merkmale zugreift.

Die Energiespeichersteuerung 130-M, welche die Funktion der Systemsteuerung 140 ausführt, kann aus einem Slave-Funktionsumfang 134 und dem Funktionsumfang der Systemsteuerung 140 zusammengesetzt sein. Der Slave-Funktionsumfang 134 kann dem Funktionsumfang für den Einzelbetrieb eines einzigen Energiespeichers und/oder dem Betrieb als Slave-Energiespeicher 110-S entsprechen. Der Slave-Funktionsumfang 134 kann mit dem (aktiven) Funktionsumfang der anderen Energiespeichersteuerungen 130-S übereinstimmen. Der Slave-Funktionsumfang 134 kann einen bestehenden Funktionsumfang eines herkömmlichen Energiespeichers beinhalten. Dadurch kann der Energiespeicher 110 abwärtskompatibel zum Einzelbetrieb sein.

Die Speicherzellen 122 im Energiespeicher 110-M betreffende Daten 401 werden von der Energiespeichersteuerung 130-M in ein Anwendungsformat der Systemsteuerung 140 multiplexiert und an einer virtuellen oder physischen Schnittstelle als Signal 402 des Energiespeichers 110-M an die Systemsteuerung 140 übergeben. Entsprechende Daten betreffend die Speicherzellen 122 der jeweils anderen Energiespeicher 110-S werden in den jeweiligen Energiespeichersteuerungen 130-S in das Anwendungsformat der Systemsteuerung 140 multiplexiert und als das Signal 402 des Energiespeichers 110-S an der zweiten Datenschnittstelle 144 des jeweiligen Energiespeichers 110-S mittels des externen Datenbusses 132 an die Systemsteuerung 140 ausgegeben. Auf Grundlage der Signale 402 der Energiespeicher 110 gibt die Systemsteuerung 140 das Systemsignal 404 an der ersten Datenschnittstelle 142 aus.

In der entgegengesetzten Kommunikationsrichtung kann die Systemsteuerung 140 ein Fahrzeugsignal 406 an der ersten Datenschnittstelle 142 erhalten. Optional verarbeitet die Systemsteuerung 140 das Fahrzeugsignal 406. Die Systemsteuerung 140 leitet (gegebenenfalls nach der Signalverarbeitung) das Fahrzeugsignal 406 selektiv weiter oder gibt ein aus dem Fahrzeugsignal 406 abgeleitetes Steuersignal 408 an den Slave-Funktionsumfang 134 der jeweils betreffenden Energiespeichersteuerungen 130-M und/oder 130-S aus.

Die Konfiguration einer jeden Energiespeichersteuerung 130 als Master-Energiespeichersteuerung 130-M mit aktivierter Funktion der Systemsteuerung 140 oder als Slave-Energiespeichersystemsteuerung 130-S mit deaktivierter Funktion der Systemsteuerung 140 kann dadurch erreicht werden, dass die in allen Energiespeichersteuerungen 130 implementierte Funktion der Systemsteuerung 140 im deaktivierten Zustand eine Weiterleitungsfunktion ausführt. Die Weiterleitungsfunktion leitet die Signale 402 (d. h., die multiplexierten Daten) direkt an die zweite Datenschnittstelle 144 des jeweiligen Energiespeichers 110-S zur Ausgabe weiter. Die an der zweiten Datenschnittstelle 144 des jeweiligen Energiespeichers 110-S erhaltenen Steuersignale 408 werden an den Slave-Funktionsumfang 134 der Energiespeichersteuerung 130-S weitergeleitet.

Beispielsweise kann an der ersten Datenschnittstelle 142 ein Notabschaltsignal 406 vom Fahrzeug erhalten werden. In Reaktion auf das erhaltene Notabschaltsignal 406 gibt die Systemsteuerung 140 an das Schaltschütz 170 des eigenen Energiespeichers 110-M und über den externen Datenbus 132 an alle anderen Schaltschütze 170 ein Steuersignal 408 zur Trennung (d. h. Potenzialfreischaltung) der Hochvoltschnittstellen 114 aus.

Durch die mit der Systemsteuerung 140 verbundene erste Datenschnittstelle 142 ist eine einzige Kommunikationsschnittstelle zum Fahrzeug bereitgestellt, so dass das TES-System 100 hinsichtlich der Kommunikation mit dem Funktionsnetz 150 des Fahrzeugs einem einzigen Energiespeicher mit entsprechenden Speichereigenschaften gleicht. Vorzugsweise kann durch Konfiguration der Parameter der Energiespeichersteuerung 130 jeder einzelne Energiespeicher 110 wahlweise als unverbundener Einzel-Energiespeicher, als Master-Energiespeicher 110-M im Verbund des TES-Systems 100 oder als Slave-Energiespeicher 110-S im Verbund des TES-Systems 100 konfiguriert werden.

Die Systemsteuerung 140 gibt mit dem Systemsignal 404 beispielsweise einen aggregierten gemeinsamen Zustand (oder Status) aller zum TES-System 100 gehörenden Energiespeicher 110 aus. Jedes Signal 402, das von einer der Slave-Energiespeichersteuerungen 130-S ausgegeben wird, wird in der Master-Energiespeichersteuerung 130-M von der Systemsteuerung 140 mit den entsprechenden Signalen 402 (soweit vorhanden) der anderen Energiespeicher 110 aggregiert und als ein gemeinsamer Wert als das Systemsignal 404 nach au-ßen zum Fahrzeug über die erste Datenschnittstelle 142 kommuniziert.

Die Aggregation beinhaltet auch eine Kontrollfunktion. Beispielsweise umfasst die Kontrollfunktion eine Überprüfung des Verbindungsstatus aller Energiespeicher 110 am externen Datenbus 132. Alternativ oder ergänzend umfasst die Kontrollfunktion eine Plausibilitätsprüfung der von den Slave-Energiespeichersteuerungen 130-S erhaltenen Signale. Die Plausibilitätsprüfung vergleicht das erhaltene Signal mit für den Signaltyp in der Systemsteuerung 140 gespeicherten Grenzwerten (z. B. Stromgrenzen) für den jeweiligen Energiespeicher 110-S.

Ist ein erhaltenes Signal fehlerhaft, nicht plausibel oder nicht vorhanden, führt die Systemsteuerung 140 eine Fehlerreaktion aus.

Bestimmen die Daten 402 elektrotechnische Größen (beispielsweise einen momentanen Strom, einen maximal entnehmbaren Strom, eine momentane Spannung oder eine Restladung), berechnet die Systemsteuerung 140 in Abhängigkeit der Verschaltung der Hochvoltschnittstellen 114 die aggregierte elektrotechnische Größe und gibt diese als das Systemsignal aus. Die verwendete Verschaltung der Hochvoltschnittstellen 114 wird im Zuge der Konfiguration des Master-Energiespeichers 110-S in der Systemsteuerung 140 gespeichert. Beispielsweise sind in der Systemsteuerung 140 in Abhängigkeit von der Verschaltung Aggregationsregeln gespeichert. Die Aggregationsregeln können die Aggregation der Speicherzustände der verschalteten Energiespeicher 110 zum TES-Systemzustand definieren.

Die Signale 402 der einzelnen Energiespeicher 110, die eine gemessene Temperatur angeben, werden durch Auffinden eines Extremwerts unter den signalisierten Temperaturwerten aggregiert. Beispielsweise wird unter allen signalisierten Temperaturwerten, die größer als 0°C sind, der größte Temperaturwert im Systemsignal 404 ausgegeben. Alternativ oder ergänzend wird unter allen signalisierten Temperaturwerten, die kleiner oder gleich 0°C sind, der kleinste Temperaturwert im Systemsignal 404 ausgegeben.

Vorzugsweise werden die einzelnen Energiespeicher 110 durch eine gemeinsame Kühlmittelzirkulation in einem Betriebstemperaturbereich gehalten. Unter den von den einzelnen Energiespeichern 110 signalisierten Temperaturwerten des Kühlmittels wird der größte Temperaturwert als das Systemsignal ausgegeben.

Die von den einzelnen Energiespeichern 110 erhaltenen Signale 402 geben optional eine Ladung (z. B. absolut in Coulomb oder relativ, beispielsweise eine verbleibende Restladung) an. Die Summe der signalisierten Ladungen wird im Systemsignal 404 ausgegeben.

Optional geben die Signale 402 für jeden verfügbaren Energiespeicher 110 einen Maximalstrom an. Beispielsweise wird der kleinste Maximalstrom (aus den signalisierten Maximalströmen der einzelnen Energiespeicher 110) mit der Anzahl verfügbarer Energiespeicher 110 multipliziert und im Systemsignal 404 ausgegeben. Ein Energiespeicher 110 ist verfügbar, wenn von ihm keine Fehlermeldung vorliegt und kein Fehler durch die Systemsteuerung 140 festgestellt wurde.

Dadurch kann sichergestellt werden, dass jeder einzelne Energiespeicher 110 innerhalb der für seine Eigensicherheit fortlaufend geprüften Grenzen betrieben wird. Ferner kann durch den Ausschluss fehlerhafter Energiespeicher 110 aufgrund der parallelen Verschaltung der Hochvoltschnittstellen 114 mit nur einem Teil der Energiespeicher 110 (z. B. dem ersten Cluster) das Fahrzeug betrieben werden. Dadurch kann ein redundanter Betrieb (z. B. bei einer Überkapazität an Energiespeichern 110) oder ein Notbetrieb (z. B. ein sogenannter "Limp Home Mode") realisiert werden.

Fehlerhafte Energiespeicher 110 werden mittels des jeweiligen Schaltschützes 170 oder der jeweiligen Schaltschütze 170 vom Leistungsnetz 160 getrennt. Jeder einzelne Energiespeicher 110 implementiert seine Eigensicherheit. Dadurch kann die Systemsteuerung 140 ohne Sicherheitsrelevanz sein.

Optional geben die Signale 402 der einzelnen Energiespeicher 110 einen Energieinhalt des jeweiligen Energiespeichers 110 an. Das Systemsignal 404 gibt einen entnehmbaren Gesamtenergieinhalt an. Das Systemsignal 404 kann auf einer (optional gewichteten) Summe der einzelnen Energieinhalte basieren. Der Beitrag der einzelnen Energieinhalte jedes Energiespeichers 110 zum entnehmbaren Gesamtenergieinhalt kann aus einem anteiligen Batteriestrom bestimmt werden.

Auf Grundlage eines von jedem Energiespeicher 110 signalisierten Innenwiderstandswerts des jeweiligen Energiespeichers 110 kann gemäß der Verschaltung der Hochvoltschnittstellen 114 der Gesamtwiderstand berechnet und als Systemsignal 404 ausgegeben werden. Alternativ oder ergänzend bestimmt die Systemsteuerung 140 auf Grundlage der signalisierten Innenwiderstandswerte den anteiligen Batteriestrom.

Optional erhält die Systemsteuerung 140 von jedem Energiespeicher 110 Signale 402 mit Lebensdauer-optimierten Grenzwerten (für eine Obergrenze und eine Untergrenze) des Ladezustands. Zur Aggregation der Lebensdauer-optimierten Grenzwerte des Ladezustands wählt die Systemsteuerung 140 die Lebensdauer-optimalen Grenzwerte des Ladezustands aus, welche mit der daraus resultierenden Stromverteilung aller Energiespeicher 110 möglichst optimal auf eine Soll-Alterungskurve zurückführen. Dabei wird die resultierende Stromverteilung der einzelnen Energiespeicher 110 aus dem von den einzelnen Energiespeichern 110 signalisierten Innenwiderstandswerten von der Systemsteuerung 140 berechnet.

Die einzelnen Energiespeicher 110 können ferner einen Alterungszustand (auch als "State of Health" oder SoH bezeichnet) des jeweiligen Energiespeichers 110 angeben. Der Alterungszustand der einzelnen Energiespeicher 110 wird von der Systemsteuerung 140 als Fehlerindikator des jeweiligen Energiespeichers 110 (z. B. beim Überschreiten von Grenzwerten) und/oder zur Berechnung eines Lebensdauer-optimierten Grenzwerts für den Strom des jeweiligen Energiespeichers 110 oder des TES-Systems 100 verwendet.

Alternativ oder ergänzend kann der Speicherzustand (z. B. der Ladezustand und/oder der Alterungszustand) nach denselben Aggregationsregeln berechnet werden, die auch für die Zustandsaggregation der einzelnen Speicherzellen 122 innerhalb der Zellmodulsteuerung 124 implementiert sind.

Die Signale 402 der einzelnen Energiespeicher 110 geben einen Spannungswert (beispielsweise einen gegenwärtigen und/oder einen vorhergesagten Spannungswert) für die einzelnen Energiespeicher 110 an. Das Systemsignal 404 für den entsprechenden Spannungswert wird gemäß der Verschaltung der Hochvoltschnittstellen 114 von der Systemsteuerung 140 berechnet.

Allgemein kann ein Systemzustand 404 des TES-Systems 100 bestimmt werden, indem der sicherste oder konservativste Zustand aus den von den Energiespeichern 110 als verfügbar signalisierten Zuständen 402 ausgewählt wird. Alternativ oder ergänzend kann das TES-System 100 gemäß dem leistungsschwächsten Energiespeichersystem 110 betrieben wird. Der sicherste Zustand kann der für den momentanen Betrieb aller Energiespeicher 110 zuverlässigste Zustand sein. Der konservativste Zustand kann eine Lebensdauer aller Energiespeicher 110 maximieren.

In der Kommunikationsrichtung vom Fahrzeug zu den Energiespeichern 110 werden alle Fahrzeugsignale 406, welche die Master-Energiespeichersteuerung 110-M vom Fahrzeug erhält, an den jeweiligen Slave-Funktionsumfang 134 der einzelnen Energiespeichersteuerungen 130 verteilt. Gegebenenfalls wird das Fahrzeugsignal dabei in ein für jede einzelne Energiespeichersteuerung 130 spezifisches Steuersignal 408 umgesetzt.

Die Aggregation und Verteilung der Signale durch die Systemsteuerung 140 betrifft auch die Diagnose des TES-Systems 100 (z. B. Diagnoseanforderungen vom Fahrzeug an die Systemsteuerung 140 und Diagnosemeldungen von der Systemsteuerung 140 an das Fahrzeug). Diagnosemeldungen der einzelnen Energiespeichersteuerungen 130 werden durch die Systemsteuerung 140 gesammelt und aggregiert an das Fahrzeug über die erste Datenschnittstelle 142 ausgegeben. Die Aggregation kann beispielsweise die Bildung eines einheitlichen Datensatzes in einem Datenpaket des Systemsignals 404 umfassen. Im Datensatz sind Diagnosewerte bezüglich der einzelnen Zellmodule 120 ohne eine Gruppierung in Energiespeicher 110 aufgelistet.

Diagnoseabfragen (die auch als Diagnoseroutinen bezeichnet werden) vom Fahrzeug werden an der ersten Datenschnittstelle 142 der Systemsteuerung 140 erhalten und an den bestehenden Funktionsumfang 134 der einzelnen Energiespeichersteuerungen 130 weitergeleitet.

Für das Zusammenschalten einer Teilmenge der Energiespeichern 110 können deren (beispielsweise an den jeweiligen Hochvoltschnittstellen 114 implementierten) Schaltschütze 170 (und das Systemschaltschütz 164) geschlossen werden. Die Spannungen an den Hochvoltschnittstellen 114 der zusammengeschalteten Energiespeichern 110 sind aufgrund der Parallelschaltung der Energiespeicher 110 einheitlich. Im Betriebszustand fließen Lade- beziehungsweise Entladeströme durch die Systemhochvoltschnittstelle 162. Der durch die Systemhochvoltschnittstelle 162 fließende Strom verteilt sich (zumindest im Allgemeinen) nicht zu gleichen Teilen auf die Hochvoltschnittstellen 114 der einzelnen Energiespeicher 110, beispielsweise da sich die Energiespeicher 110 in ihren Speicherzuständen unterscheiden. Der Speicherzustand jedes Energiespeichers 110 kann elektrochemische Zustandsgrößen (beispielsweise Ladezustand, Alterungszustand oder Speicherkapazität) und/oder elektrotechnische Größen (beispielsweise Strom, Leerlaufspannung, Innenwiderstand) umfassen.

Die Speicherkapazität jedes Energiespeichers 110 kann seine Speicherfähigkeit als die im vollständig geladenen Zustand entnehmbare Ladung (z. B. das Zeitintegral des Entladestroms von Anfangsspannung bis Schlussspannung) beschreiben. Der Ladezustand (auch als "State of Charge" oder SoC bezeichnet) jedes Energiespeichers 110 ist der Anteil der noch entnehmbaren Ladung an der Speicherkapazität. Der funktionale Zusammenhang zwischen der (z. B. relaxierten) Leerlaufspannung (OCV) an der Hochvoltschnittstelle 114 und dem Ladezustand des Energiespeichers 110 ist die Entladekurve.

Der Speicherzustand jedes Energiespeichers 110 umfasst mindestens eine der folgenden Größen des jeweiligen Energiespeichers 110: die Speicherkapazität, den Ladezustand, einen Alterungszustand, die Leerlaufspannung, einen Innenwiderstand, eine erste Zeitkonstante (beispielsweise verursacht durch eine elektrochemische Doppelschicht zwischen Elektrode und Elektrolyt) und/oder eine zweite Zeitkonstante (beispielsweise verursacht durch Diffusion der Ionen im Elektrolyt). Die erste Zeitkonstante kann ein Sekundenbruchteil, beispielsweise weniger als 0,1 s oder 0,01 s sein. Die zweite Zeitkonstante kann größer als die erste Zeitkonstante sein, beispielsweise größer als 1 s oder 10 s.

Mittels einer in der Energiespeichersteuerung 130 gespeicherten Entladekurve kann aufgrund der gemessenen Leerlaufspannung der momentane Ladezustand bestimmt werden. Die Entladekurve kann tabellierten und/oder durch Integration des Stroms im Betriebszustand aktualisiert werden.

Die einzelnen Energiespeicher 110 im TES-System 100 können sich in ihren Entladekurven und/oder Speicherzuständen unterscheiden, beispielsweise hinsichtlich Speicherkapazität, Ladezustand, Leerlaufspannung, Innenwiderstand, erster Zeitkonstanten und/oder zweiten Zeitkonstanten. Ursache und lokale Einflussfaktoren der abweichenden Speicherzustände der einzelnen Energiespeicher 110 sind beispielsweise Fertigungsstreuung, Alterung und Temperatur.

Deshalb liegen (beispielsweise in oder nach einem Betriebszustand des TES-Systems 100, wenn das Fahrzeug abgestellt wird und/oder eine Klemme der Fahrzeugzündung auf einem Referenzpotential liegt) die Energiespeicher 110 in unterschiedlichen Speicherzuständen vor. Beispielsweise können Ladezustand und/oder Leerlaufspannung der einzelnen Energiespeicher 110 uneinheitlich sein. Solche abweichenden Speicherzustände können im Betriebszustand auch bei im Wesentlichen übereinstimmenden Speicherkapazitäten und Entladekurven durch unterschiedliche Innenwiderstände oder Zeitkonstanten entstehen.

Nach dem Betriebszustand können Relaxationseffekte (beispielsweise mit unterschiedlichen zweiten Zeitkonstanten) und/oder Selbstentladung (beispielsweise mit unterschiedlichen Entladungsraten) die Abweichung zwischen den Zell-, Modul- und Speicherzuständen vergrößern.

Unterschiedliche Leerlaufspannungen führen beim Schließen der Schaltschütze 170 der Energiespeicher 110 zu Ausgleichsströmen (beispielsweise zu Beginn des nächsten Betriebszustands), welche die Schaltschütze 170 schädigen können. Wird die Spannungsdifferenz größer als eine schaltbare Maximalspannung oder übersteigt der durch die Spannungsdifferenz verursachte Ausgleichsstrom einen (von zumindest einem der Energiespeicher 110 für dessen Eigensicherheit) überwachten Maximalstrom, kann ein Schließen (und damit ein weiterer Betriebszustand des TES-Systems 100) unmöglich sein.

Weiterhin überwacht der Slave-Funktionsumfang 134 jedes Energiespeichers 110 die Betriebsgrenzen seiner Zellmodule 120 und/oder seiner Speicherzellen 122. Die Stromgrenze der Zellen 122, und damit die Stromgrenze der Energiespeicher 110, hängen von den Betriebsbedingungen (beispielsweise Temperatur, Strom, Zeit und/oder SoC) ab. Beispielsweise kann die Stromgrenze bei einer Temperatur der Zellen 122 von -30°C nahe Null sein.

Deshalb muss vor dem Zuschalten sichergestellt sein, dass die Ausgleichsströme kleiner oder gleich der maximal zulässigen Stromgrenze sind. Ansonsten würden sich die entsprechenden Slave-Energiespeicher 110-S direkt nach dem Zuschalten wieder abschalten. Da Letztes sogar unter Last erfolgen würde, käme es (beispielsweise zusätzlich zum schädigenden Zuschalten) zu einem schädigenden Abschalten mit einer Verringerung der Lebensdauer des Schaltschützes 170. Die Zuschaltfunktion für parallelschaltbare Energiespeicher 110 muss diesen Anforderungen gerecht werden, um ein funktionierendes TES-System 100 zu ermöglichen.

Aufgrund des Speicherzustands (beispielsweise der Leerlaufspannung) der Energiespeicher 110 lassen sich eine symmetrische Teilmengen der Energiespeicher 110 und weitere asymmetrische Energiespeicher 110 unterscheiden.

"Symmetrische" Energiespeicher 110 haben ähnliche Speicherzustände, vorzugsweise ähnliche Leerlaufspannungen (als Speicherzustand oder als Teil des Speicherzustands). Die aus der Differenz der Leerlaufspannungen resultierenden Ausgleichsströme verletzten beim Zusammenschalten symmetrischer Energiespeicher 110 nicht die Stromgrenzen der zusammengeschalteten Energiespeicher 110. Die Teilmenge symmetrischer Energiespeicher 110 ist zusammenschaltbar (beispielsweise bei der Inbetriebnahme des Fahrzeugs) oder es kann ein symmetrischer Energiespeicher 110 zu einer bereits zusammengeschalteten Teilmenge der Energiespeicher 110 hinzugeschaltet werden (beispielsweise im Betrieb des Fahrzeugs).

Sollte die Differenz der Leerlaufspannung zwischen den Energiespeichern 110 größer sein, führt dies zu asymmetrischen Systemen. Dies kann beispielsweise auftreten, wenn eine Funktion zum Angleichung (auch: Balancing-Funktion, beispielsweise hinsichtlich OCV oder SoC) der Energiespeicher 110 des TES-Systems 100 eine solche Differenz in der Leerlaufspannung zulässt, z. B. aufgrund reduzierter Verfügbarkeit eines Angleichungszustands zum Ausführen der Balancing-Funktion bei anhaltendem Betrieb des Fahrzeugs.

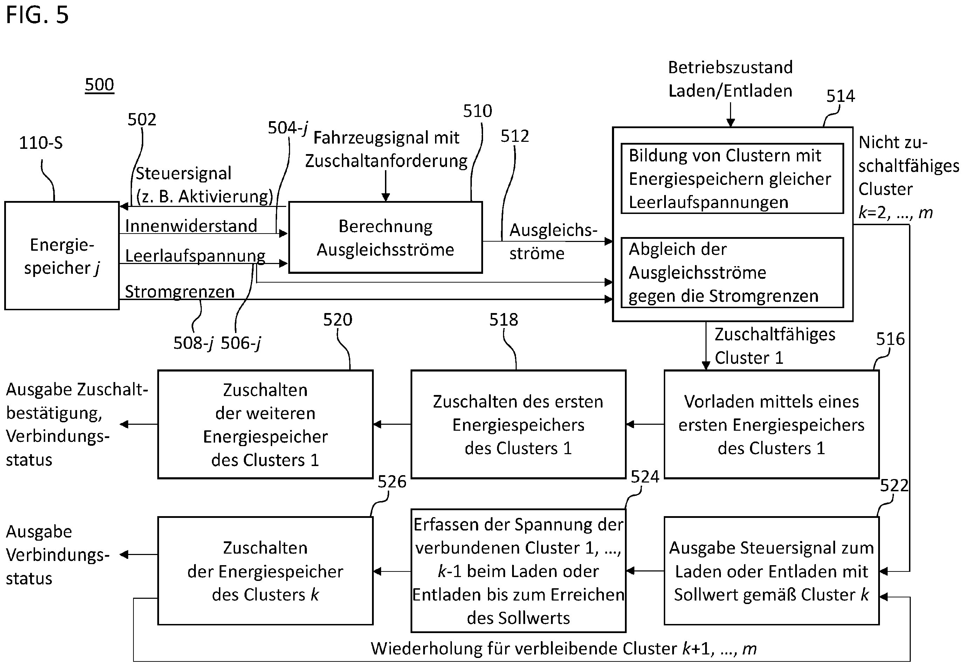

Figur 5 zeigt ein Ausführungsbeispiel der Funktion des Zuschaltens 500 im parallelschaltbaren TES-System 100. Die Funktion des Zuschaltens 500 ist vorzugsweise in der Systemsteuerung 140 implementiert.

Erhält der Master-Energiespeicher 110-M (insbesondere die Systemsteuerung 140) eine Zuschaltanforderung vom Fahrzeugfunktionsnetz 150, aktiviert der Master-Energiespeicher 110-M (insbesondere die Systemsteuerung 140) die Slave-Energiespeicher 110-S (insbesondere den jeweiligen Funktionsumfang 134) durch eine entsprechende Anweisung 502 im Signal 408. Beispielsweise wird durch die Anweisung 502 der Slave-Energiespeicher 110-S aus einem energiesparenden Modus des Funktionsumfangs 134 in einen aktiven Modus des Funktionsumfangs 134 versetzt.

In einem Schritt 510 liest die Systemsteuerung 140 von jedem der m Energiespeicher 110 mit Index $j=1,..., n$ (beispielsweise von jedem Funktionsumfang 134 der Slave-Energiespeicher 110-S und vom Funktionsumfang 134 des Master-Energiespeichers 110-M) den jeweiligen Speicherzustand und eine oder mehrere Maximalströme oder Stromgrenzen 508-$j$ (z. B. jeweils für Laden und/oder Entladen) des jeweiligen Energiespeichers 110 ein. Der Speicherzustand des $j$-ten Energiespeichers 110 umfasst den Innenwiderstand 504-$j$ (symbolisch: $R_j$) und/oder die Leerlaufspannung 506-$j$ (symbolisch: $OCV_j$). Der Begriff "Speicherzustand" kann dahingehend definiert sein, auch die Stromgrenzen 508-$j$ zu umfassen.

Auf Basis der eingelesenen Informationen berechnet die Systemsteuerung 140 des Master-Energiespeichers 110-M die bei einer geänderten Verschaltung (insbesondere beim Zuschalten eines weiteren Energiespeichers 110) zu erwartenden Ausgleichsströme 512 zwischen den dann zusammengeschalteten Energiespeichern 110.

In einem Schritt 514 bestimmt die Systemsteuerung 140 m verschiedene Cluster (beispielsweise mit Index $k=1, ..., m$) mit hinsichtlich ihres Speicherzustands ähnlichen Energiespeichern 110. Vorzugsweise werden die m Cluster aufgrund ihrer Leerlaufspannung definiert.

Beispielsweise werden im Cluster 1 alle symmetrischen Energiespeicher 110 zusammengefasst. In den Clustern 2 bis m werden jeweils hinsichtlich ihres Speicherzustands ähnliche Energiespeicher 110 zusammengefasst, die bezüglich Cluster 1 asymmetrisch sind.

Ferner wird im Schritt 514 die Zuschaltfähigkeit der Cluster, oder einzelner Energiespeicher 110 in den Clustern, durch Abgleich der berechneten Ausgleichsströme 512 mit den jeweiligen Stromgrenzen 508-j bestimmt. Beispielsweise schaltet die Systemsteuerung 140 des TES-Systems 100 nur Energiespeicher 110 miteinander parallel, deren Differenz in der Leerlaufspannung kleiner als ein bestimmter Grenzwert ist. Falls beispielsweise der Energiespeicher $j = 2$ zum Energiespeicher $j = 1$ hinzugeschaltet werden soll, kann die Differenz in der Leerlaufspannung bestimmt werden gemäß

$$OCV_1 - OCV_2 = I_{Ausgleich} \cdot (R_1 + R_2), \tag{1}$$

wobei $I_{Ausgleich}$ den für das Zusammenschalten berechneten Ausgleichsstrom 512 zwischen den Energiespeichern 110 mit Indizes $j=1$ und $j=2$ bezeichnet.

Der Grenzwert an die Differenz der Leerlaufspannungen, $|OCV_1 - OCV_2|$, kann aus der Bedingung für einen maximalen Entladestrom $I_j^{max}$ des j-ten Energiespeichers 110,

$$I_{Ausgleich} < \min_{j=1,2} (I_j^{max}), \tag{2}$$

oder mit der zusätzlichen Bedingung für einen maximalen Ladestrom $-I_j^{min} > 0$ des j-ten Energiespeichers 110,

$$\max_{j=1,2} (I_j^{min}) < I_{Ausgleich} < \min_{j=1,2} (I_j^{max}), \tag{3}$$

berechnet werden.

Weiterhin kann bei der Clusterbildung im Schritt 514 berücksichtigt werden, dass schnellstmöglich die Leistungsanforderungen des Fahrzeuges abgedeckt werden. So kann das Fahrzeug zu Beginn z. B. mit voller Leistung losfahren, jedoch ggf. noch nicht mit voller Reichweite. Beispielsweise ist bei Betriebsbeginn des Fahrzeugs der erste Cluster (z. B. per Definition "symmetrische" Cluster), der mit dem Fahrzeugleistungsnetz 160 verbunden wird, der Cluster mit der dem höchsten (beispielsweise über den Cluster gemittelten) Speicherzustand, z. B. mit der höchsten Leerlaufspannung oder dem höchsten Ladezustand.

Bei Betriebsbeginn oder im Betrieb erhält der erste Energiespeicher 110 des zum Zuschalten ausgewählten, zuschaltfähigen Clusters (in Figur 5 gezeigt mit Index *j*=1) von der Systemsteuerung 140 als Signal 408 an den Funktionsumfang 134 die Anweisung, einen Zwischenkreis vorzuladen (Schritt 516). Im Schritt 518 wird der erste Energiespeicher 110 durch Schließen seines Schaltschützes 170 zugeschaltet.

Ist der erste Energiespeicher 110 des ersten Clusters zugeschaltet, weist die Systemsteuerung 140 im Schritt 520 nacheinander die restlichen Energiespeicher 110 des ausgewählten ersten Clusters k=1 an, durch Schließen ihrer Schaltschütze 170 zuzuschalten. Eine weitere Vorladung wird nicht mehr benötigt aufgrund der Definition der Clusterzuordnung.

Als Rückmeldung im Signal 404 an das Fahrzeugfunktionsnetz 150 wird das erfolgreiche Zuschalten bestätigt und/oder ein Verbindungsstatus ausgegeben. Der Verbindungsstatus kann den mit dem Fahrzeugleistungsnetz 160 verbundenen Anteil (beispielsweise bezogen auf die Anzahl der Energiespeicher 110 oder Speicherkapazität) angeben (z. B. "50% der Energiespeicher verbunden").

Sollten weitere asymmetrische Cluster (beispielsweise mit Index *k*=2,..., m) vorhanden sein, werden diese nicht unmittelbar zugeschaltet. Die beim Zuschalten eines asymmetrischen Clusters (oder dessen Energiespeicher 110) auftretenden Ausgleichsströme 512 wären größer als die Stromgrenzen 508-j der betroffenen (z. B. zuvor verbundenen oder neu zugeschalteten) Energiespeicher 110, die zum Erreichen der Lebensdauer des Schaltschützes 170 oder der Zellen 122 eingehalten werden.

Im Schritt 522 gibt die Systemsteuerung 140 im Signal 404 an das Fahrzeugfunktionsnetz 150 eine Aufforderung, einen bestimmten Zustand anzufahren. Der bestimmte Zustand kann im Signal 404 als Zielwert für den Systemzustand ausgegeben werden. Vorzugsweise wird eine bestimmte Spannungslage (beispielsweise eine Ziel-Spannung für die Systemspannung 206) oder ein bestimmter System-Ladezustand (beispielsweise ein Zielwert für den aggregierten SoC) für das TES-System 100 mit den verbundenen Energiespeichern 110 ausgegeben.

Beispielsweise in Abhängigkeit eines Energiemanagements des Fahrzeuges, werden im Laufe der Zeit die verbundenen Energiespeicher 110 gezielt auf einen Speicherzustand gebracht, der dem vorgegebenen Wert des Systemzustands entspricht. Beispielsweise wird die Leerlaufspannung der verbundenen Energiespeicher 110 auf die bestimmte Spannungslage gebracht durch Laden beziehungsweise Entladen des TES-Systems 100.

Im Schritt 524 überwacht die Systemsteuerung 140 die Annäherung der Speicherzustände (der bereits verbundenen Energiespeicher 110) oder für die (bereits verbundenen Cluster 1, ..., *k*-1) aggregierten Zustände an den bestimmten Zustand (beispielsweise die Leerlaufspannung).

Ist die bestimmte oder eine für das Zuschalten erforderliche Spannungslage erreicht, weist die Systemsteuerung 140 im Schritt 526 der Reihe nach alle Energiespeicher 110 des k-ten Clusters zum Zuschalten an. Eine weitere Vorladung wird nicht mehr benötigt.

Als Rückmeldung an das Fahrzeug wird ein aktualisierter Verbindungsstatus ausgegeben (z. B. "80% der Energiespeicher verbunden").

Die Schritte 522 bis 526 können wiederholt werden bis alle Energiespeicher 110 verbunden sind.

In Abhängigkeit der angeforderten Betriebsart, z. B. Laden oder Entladen, wird zuerst der Cluster mit dem höchsten beziehungsweise niedrigsten Speicherzustand (z. B. OCV und/oder SoC) als zuschaltfähiges Cluster im Schritt 514 ausgewählt. So kann der Cluster mit der geringsten Spannungslage für ein optimales Laden ausgewählt werden. Alternativ oder ergänzend kann beim Entladen für eine maximale Leistung der Cluster mit der höchsten Spannungslage ausgewählt werden.

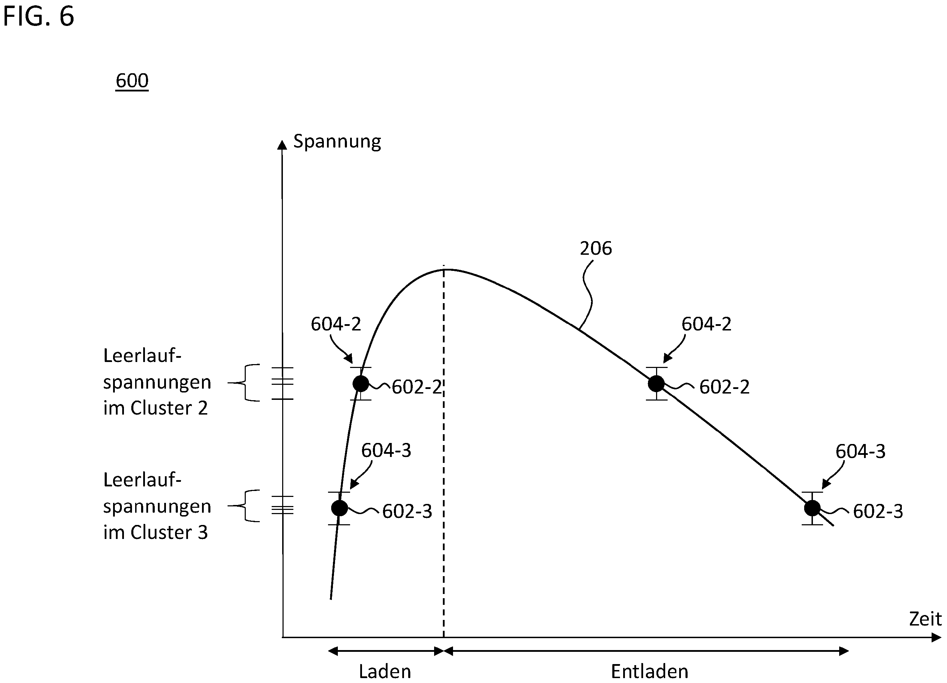

Figur 6 zeigt schematisch ein Beispiel eines zeitlichen Verlaufs 600 der Systemspannung 206 oder einer Systemleerlaufspannung. Im in Figur 6 gezeigten Beispiel ist ein Cluster 1 (d. h. eine symmetrische Teilmenge der Energiespeicher 110) zusammengeschaltet und mit der Hochvoltschnittstelle 162 verbunden, an der die Systemspannung 206 anliegt.

Neben den Energiespeichern 110 des Clusters 1 umfasst das TES-System 100 mindestens einen weiteren Energiespeicher 110, der oder die jeweils entweder einem Cluster 2 oder einem Cluster 3 zugeordnet sind. Die Energiespeicher 110 eines jeden Clusters (beispielsweise des Clusters 2 und 3) können jeweils untereinander symmetrischen sein, beispielsweise damit je Cluster-Zuschaltung die Zuschaltfähigkeit nur einmal festgestellt werden muss.

Die Energiespeicher 110 eines jeden Clusters (beispielsweise des Clusters 2 und 3) sind bezüglich eines anderen Clusters (beispielsweise des gegenwärtig mit der Hochvoltschnittstelle 162 verbundenen Clusters 1) asymmetrisch. Um Energiespeicher 110 des Clusters 2, zuzuschalten gibt die Systemsteuerung 140 an das Fahrzeug die Anweisung, die Systemspannung 206 oder die Leerlaufspannung des TES-System 100 (d. h. die Leerlaufspannung des Verbunds der gegenwärtig zusammengeschalteten Energiespeicher 110), der Leerlaufspannung 602-2 des Clusters 2 anzunähern, als ein Beispiel für den anzufahrenden Zustand. Dadurch verändert sich die Systemspannung 206 beziehungsweise die Systemleerlaufspannung je nach Betriebszustand (Laden oder Entladen) gemäß dem Verlauf 600.

Um die Leerlaufspannung 602-k des k-ten Clusters ist ein Bereich 604-k definiert. Erreicht im Schritt 524 die Systemspannung 206 beziehungsweise die Systemleerlaufspannung den Bereich 604-*k* (Zuschaltfähigkeit) werden die Energiespeicher 110 des k-ten Clusters zugeschaltet im Schritt 526, beispielsweise ein Energiespeicher 110 des k-ten Clusters nach dem anderen.

Alternativ oder ergänzend kann für jeden zuzuschaltenden Energiespeicher 110 jeweils ein eigener Bereich um die Leerlaufspannung des jeweiligen Energiespeichers 110 definiert sein.

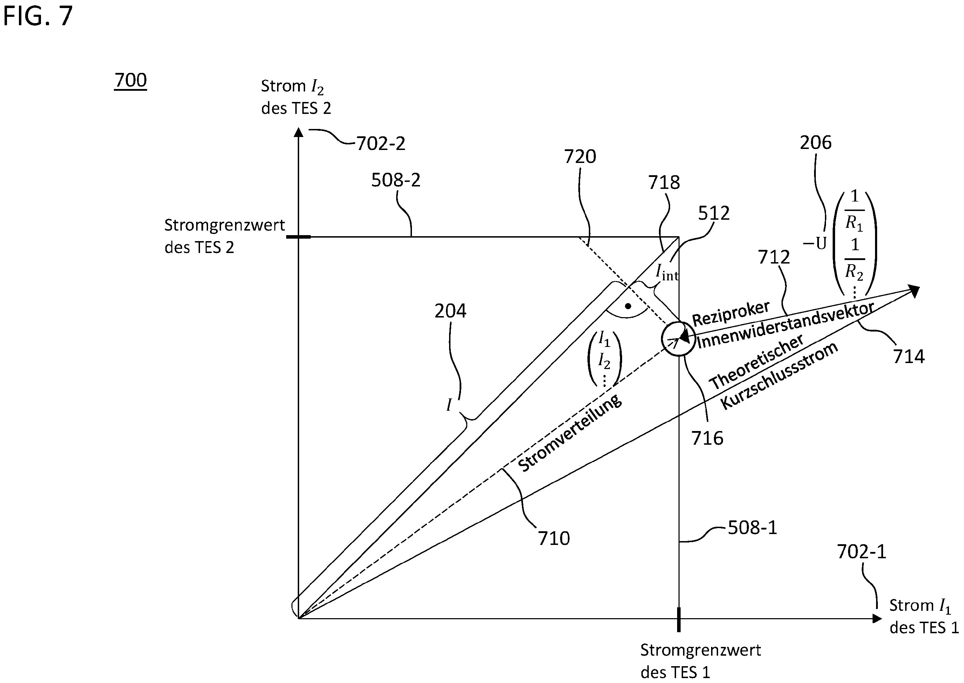

Figur 7 zeigt schematisch ein Diagramm 700 der Ströme im TES-System 100. Zur Übersichtlichkeit sind in Figur 7 nur die Teilströme 702-j zweier beispielhafter Energiespeicher 110 mit den Symbolen $I_j$ für $j$=1 bzw. $j$=2 gezeigt. Allgemein wird ein Vektorraum der Ströme im TES-System 100 von n orthogonalen Achsen aufgespannt, auf denen die Ströme $I_j$ der Energiespeicher 110 mit Index $j$ = 1, ..., n abgetragen sind.

Beispielsweise berechnet die Systemsteuerung 140 den anteiligen Strom $I_j$ des j-ten Energiespeichers 110 gemäß

$$I_j = (OCV_j - U) \, / \, R_j \text{ für } j = 1, ..., n, \tag{4}$$

wobei U die Systemspannung 206, $R_j$ der Innenwiderstand und $OCV_j$ die Leerlaufspannung des j-ten Energiespeichers 110 ist.

Die Systemsteuerung 140 erhält von jedem Energiespeicher 110 mindestens eine Stromgrenze 508-j für den jeweiligen Teilstrom *702-j* des j-ten Energiespeichers 110, z. B. einen Maximalstrom für jeweils den Betriebszustand des Ladens und den Betriebszustand des Ladens des Entladens.

Die aus den Größen 504-*j* und 506-j des j-ten Speicherzustands berechnete Stromverteilung 710 ist ein Vektor im Diagramm 700 mit Komponenten $I_j$ für $j$ = 1, ..., n, beispielsweise gemäß dem Gleichungssystem (4). Die Stromverteilung 710 setzt sich zusammen aus einem Stromanteil 712, der gleich dem mit der Systemspannung 206 des TES-Systems, U, skalierten reziproken Innenwiderstandsvektor $1 \, / \, R_j$ ist,

$$- U \, / \, R_j \text{ für } j = 1, ..., n,$$

und einem (theoretischen) Kurzschlussstrom 714,

$$OCV_j \, / \, R_j \text{ für } j = 1, ..., n,$$

der fließen würde, wenn der *j*-te Energiespeicher 110 kurzgeschlossen wäre.

Die Erfüllung der Stromgrenzen 508-*j*,

$$I_j \leq I_j^{\max}, \text{ für } j = 1, ..., n, \tag{5}$$

impliziert einen oberen Systemgrenzwert $I_{max}$ für den Systemstrom 204, d. h. die Summe der Teilströme,

$$I = \sum_{j=1...n} I_j. \tag{6}$$

Die Gleichungssysteme (4) und (5) sind ein Beispiel für die Aggregationsregel des Maximalstroms.

Die Stromgrenzen der Energiespeicher 110 werden erfüllt, indem der Spannungsabfall U am Fahrzeug (beispielsweise am Gleichspannungseingang des Inverters) so groß ist, dass der Zustand 716 der Stromverteilung 710 am Rand oder innerhalb des durch die Stromgrenzen 508-*j*, bestimmten Rechtecks (allgemein: n-dimensionaler Rechtkant) liegt.

Der in Figur 7 gezeigte Zustand 716 liegt auf dem Rand des zulässigen Bereichs, der durch den Grenzwert 508-1 des ersten Energiespeichers 110 bestimmt ist. D. h. der Grenzwert $I_j^{\max}$ für $j$ = 1 ist der limitierende Grenzwert, welcher den oberen Systemgrenzwert für den Systemstrom 204 bestimmt.

Der in Figur 7 gezeigte Zustand 716 entspricht einer minimalen Systemspannung U, d. h. die kleinste zulässige Systemspannung 206 für die (beispielsweise aus den erhaltenen Speicherzuständen 504 und 506 berechneten) Kenngrößen 712 und 714.

Der Systemstrom 204 ist bis auf einen Faktor (nämlich der Quadratwurzel aus der Anzahl, *n,* der parallelgeschalteten Energiespeicher 110) gleich der Projektion des Vektors, $(I_j)_{j=1..n}$, der Stromverteilung 710 auf die Winkelhalbierende 718 (die nicht notwendigerweise die Diagonale des Rechtecks der Stromgrenzen 508 sein muss). Der zur Winkelhalbierenden 718 senkrechte Anteil des Vektors der Stromverteilung 710 in der Ebene 720 entspricht den Ausgleichsströmen 512 innerhalb des TES-Systems 100.

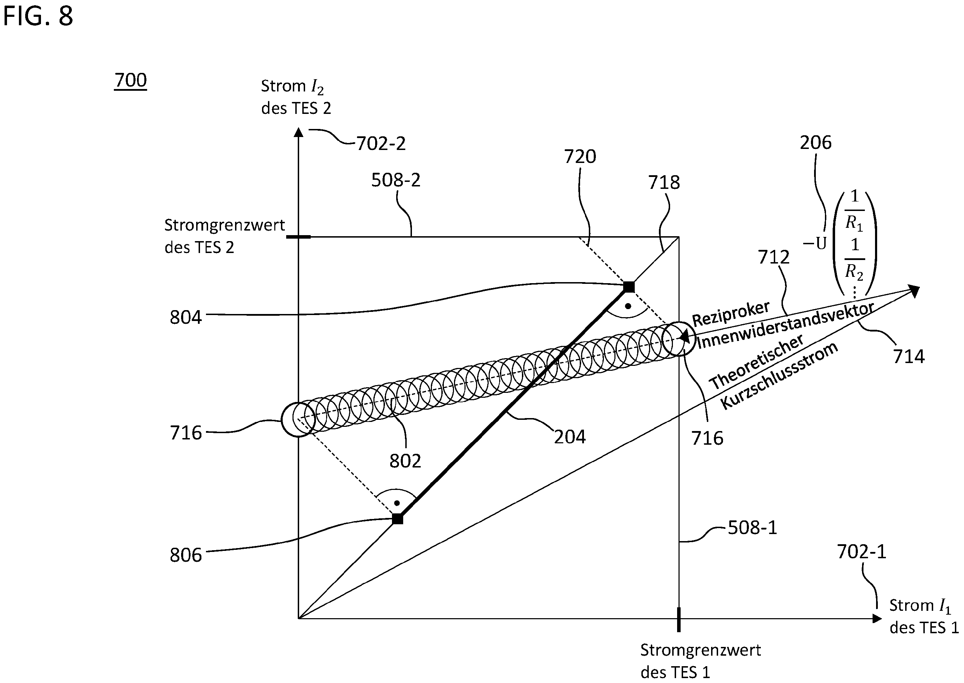

Figur 8 zeigt schematisch im Diagramm 700 die im Betrieb zulässigen und für die (beispielsweise aus den erhaltenen Speicherzuständen 504 und 506 berechneten) Kenngrößen 712 und 714 möglichen Zustände 716 auf einer Linie 802. Größere Systemspannungen 206 als beim in Figur 7 gezeigten Zustand 716 entsprechen kleineren Systemströmen 204 mit einem Stromverteilungsvektor 710, dessen Endpunkt (d. h. Zustand 716) innerhalb des durch die Stromgrenzen 508 (gemäß Gleichung 2) definierten Rechtecks auf der Linie 802 in Verlängerung des reziproken Innenwiderstandsvektors 712 liegt.

Der obere Systemgrenzwert, $I_{max}$, für den Systemstrom 204 ist in Figur 8 beim Bezugszeichen 804 dargestellt.

Untere Grenzwerte, $I_j^{min}$, für den Strom $I_j$ des j-ten Energiespeichers 110 (beispielsweise als Teil der Stromgrenzen 508) bestimmen den beim Bezugszeichen 806 gezeigten unteren Systemgrenzwert, $I_{min}$, für den Systemstrom 204.

Während in Figur 8 beispielhaft $I_j^{min} = 0$ dargestellt ist, kann ein negativer unterer Grenzwert betragsmäßig den Maximalstrom für das Laden des j-ten Energiespeichers 110 angeben. Im in Figur 8 gezeigten Beispiel ist der untere Grenzwerte $I_1^{min}$ limitierend. Der (im Diagramm 700 in Figur 8 am linken Rand liegende) Zustand 716 kleinsten Systemstroms 204 entspricht der größten zulässigen Systemspannung 206.

Beispielsweise kann vor dem Zuschalten eines weiteren Energiespeichers 110 oder Clusters zunächst für die bereits verbundenen Energiespeicher 110 deren aggregierte Stromgrenzen 804 und 806 gemäß Figur 8, deren aggregierter Innenwiderstand (als Kehrwert der Summe der reziproken Innenwiderstände $R_j$) und deren aggregierte Leerlaufspannung (beispielsweise das mit den reziproken Innenwiderständen $R_j$ gewichtete Mittel der Leerlaufspannungen $OCV_j$) bestimmt werden. Die Zuschaltfähigkeit kann im Schritt 524 bestimmt werden, indem in Gleichung (1) für $R_1$ und $OCV_1$ der aggregierte Innenwiderstand bzw. die aggregierte Leerlaufspannung eingesetzt werden, und für $R_2$ und $OCV_2$ der Innenwiderstand bzw. die Leerlaufspannung des zuzuschaltenden Energiespeichers 110.

Alternativ oder ergänzend kann im Schritt 510 und/oder 524 auf Grundlage der Speicherzustände 504-j und 506-j die Stromverteilung 710 der Energiespeicher 110 berechnet werden, die sich nach dem Zuschalten ergeben würde. Diese Teilströme 702-j der Stromverteilung 710 werden (als Ausgleichsströme 512) im Schritt 514 bzw. 524 mit den jeweiligen Stromgrenzen 508-j verglichen.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

| | |
|---|---|
| 100 | Traktionsenergiespeichersystem |
| 110 | Energiespeicher |
| 112 | Gehäuse des Energiespeichers |
| 114 | Hochvoltschnittstelle |
| 120 | Zellmodul |
| 122 | Speicherzellen |
| 124 | Zellmodulsteuerung |
| 126 | Interner Datenbus |
| 127 | Anschlussklemme |
| 128 | Stromschiene |
| 130 | Energiespeichersteuerung |
| 132 | Externer Datenbus |
| 134 | Funktionsumfang der Energiespeichersteuerung im Einzelbetrieb |
| 140 | Systemsteuerung |
| 142 | Erste Datenschnittstelle |
| 144 | Zweite Datenschnittstelle |
| 150 | Funktionsnetz des Fahrzeugs |
| 160 | Leistungsnetz des Fahrzeugs |
| 162 | Systemhochvoltschnittstelle |

| | |
|---|---|
| 164 | Systemschaltschütz |
| 170 | Schaltschütz |
| 172 | Steuerverbindung zwischen Energiespeichersteuerung und Schaltschütz |
| 202 | CAN-Bus des Funktionsnetzes |
| 204 | Systemstrom |
| 206 | Systemspannung |
| 401 | Speicherzellendaten |
| 402 | Signal des Energiespeichers |
| 404 | Systemsignal |
| 406 | Fahrzeugsignal |
| 408 | Steuersignal |
| 500 | Zuschaltfunktion |
| 502 | Anweisung an Energiespeicher |
| 504 | Innenwiderstand |
| 506 | Leerlaufspannung |
| 508 | Maximalstrom |
| 510 | Schritt des Einlesens und Berechnens |
| 512 | Ausgleichsströme |
| 514 | Schritt der Clusterzuordnung und des Stromabgleichs |
| 516 | Schritt des Vorladens |
| 518 | Schritt des Zuschaltens des ersten Energiespeichers |
| 520 | Schritt des Zuschaltens weiterer Energiespeicher desselben Clusters |
| 522 | Schritt der Zustandsanforderung |
| 524 | Schritt der Überwachung |
| 526 | Schritt des Zuschaltens weiterer Cluster |
| 600 | Verlauf der Systemspannung |
| 602 | Anzufahrender Zustand |
| 604 | Zuschaltfähiger Bereich |
| 700 | Diagramm der Ströme |
| 702 | Teilströme |
| 710 | Stromverteilung |
| 712 | Innenwiderstandsvektor |
| 714 | Kurzschlussstromvektor |
| 716 | Zustände der Stromverteilung |
| 718 | Winkelhalbierende |
| 720 | Ebene der Ausgleichsströme |
| 802 | Im Betrieb zulässige Zustände der Stromverteilung |
| 804 | Oberer Grenzwert des aggregierten Stroms |
| 806 | Unterer Grenzwert des aggregierten Stroms |

**Patentansprüche**

1. Traktionsenergiespeichersystem (100) für ein Fahrzeug, umfassend:

   mehrere elektrische Energiespeicher (110), wobei jeder der Energiespeicher über Stromschienen (128) elektrisch verbundene Zellmodule (120), ein Schaltschütz (170), eine Energiespeicherhochvoltschnittstelle (114) und eine das Schaltschütz steuernde Energiespeichersteuerung (130) umfasst,

   wobei jedes der Zellmodule mehrere Speicherzellen (122) und eine Zellmodulsteuerung (124) umfasst, und die Zellmodulsteuerungen dazu ausgebildet sind, die Speicherzellen im jeweiligen Zellmodul betreffende Messwerte auszugeben, und die Energiespeichersteuerungen dazu ausgebildet sind, abhängig von den Messwerten der Zellmodule im jeweiligen Energiespeicher einen Speicherzustand zu bestimmen, und wobei in jedem Energiespeicher (110) das Schaltschütz (170) dazu ausgebildet ist, die Stromschienen (128) des Energiespeichers mit der Energiespeicherhochvoltschnittstelle (114) des jeweiligen Energiespeichers nach Vorgabe der Energiespeichersteuerung (130) in einer Schließstellung des Schaltschützes zu verbinden und in einer Offenstellung des Schaltschützes zu trennen;

eine mit dem Fahrzeug verbundene oder verbindbare Systemhochvoltschnittstelle (162), die mit den Energiespeicherhochvoltschnittstellen der Energiespeicher verbunden ist, wobei die Energiespeicherhochvoltschnittstellen der Energiespeicher parallel geschaltet sind; und

eine Systemsteuerung (140), die dazu ausgebildet ist, eine Fahrzeuganweisung (406) zum Zuschalten gegenwärtig durch die Offenstellung getrennter Energiespeicher zu erhalten, die Speicherzustände (504; 506) der gegenwärtig getrennten Energiespeicher (110) abzufragen, auf Grundlage der abgefragten Speicherzustände die gegenwärtig getrennten Energiespeicher einem oder mehreren Clustern zuzuordnen, und nach Maßgabe der Clusterzuordnung die Energiespeicher durch Schließen der Schaltschütze (170) mittels der jeweiligen Energiespeichersteuerungen (130) zuzuschalten.

2. Traktionsenergiespeichersystem nach Anspruch 1, wobei jeder der Speicherzustände eine Leerlaufspannung (506) des jeweiligen Energiespeichers (110) angibt und die gegenwärtig getrennten Energiespeicher abhängig von der Leerlaufspannungen den Clustern zugeordnet werden.

3. Traktionsenergiespeichersystem nach Anspruch 2, wobei die einem der Cluster zugeordneten Energiespeicher (110) zugeschaltet werden, wenn die Spannung (206) der Systemhochvoltschnittstelle (162) mit einem durch die Leerlaufspannungen (506) der Energiespeicher des Clusters definierten Bereich (604) übereinstimmt.

4. Traktionsenergiespeichersystem nach Anspruch 2 oder 3, wobei jeder der Speicherzustände ferner einen Innenwiderstand (504) des jeweiligen Energiespeichers (110) angibt.

5. Traktionsenergiespeichersystem nach Anspruch 4, wobei die Systemsteuerung (140) ferner dazu ausgebildet ist, für die gegenwärtig getrennten Energiespeicher (110) auf Grundlage des jeweiligen Speicherzustands (504, 506) und einer Spannung (206) der Systemhochvoltschnittstelle (162) einen beim Zuschalten zu erwartenden Ausgleichstrom (512; 702) zu berechnen.

6. Traktionsenergiespeichersystem nach Anspruch 5, wobei jeder der Speicherzustände ferner einen Maximalstrom (508) des jeweiligen Energiespeichers (110) angibt und die gegenwärtig getrennten Energiespeicher nach Maßgabe der Clusterzuordnung zugeschaltet werden, falls der berechnete Ausgleichstrom (512; 702) kleiner als der Maximalstrom ist.

7. Traktionsenergiespeichersystem nach Anspruch 6, wobei der Maximalstrom eine Varianz der Leerlaufspannungen (506) der Energiespeicher (110) bestimmt, die demselben Cluster zugeordnet werden.

8. Traktionsenergiespeichersystem nach Anspruch 6 oder 7, wobei die Systemsteuerung (140) dazu ausgebildet ist, die Energiespeicher eines ersten Clusters zuzuschalten, indem ein Zwischenkreisspeicher mittels einem ersten Energiespeicher des ersten Clusters vorgeladen (516) wird, der erste Energiespeicher des ersten Clusters zugeschaltet (518) wird und alle weiteren Energiespeicher des ersten Clusters ohne das Vorladen zugeschaltet (520) werden.

9. Traktionsenergiespeichersystem nach einem der Ansprüche 6 bis 8, wobei die Systemsteuerung (140) ferner dazu ausgebildet ist, die Energiespeicher (110) eines zweiten Clusters, deren berechnete Ausgleichströme (512; 702) nicht alle kleiner als die Maximalströme (508) sind, zuzuschalten (526), indem an das Fahrzeug ein steuerndes Systemsignal (404) zum Laden oder Entladen des Traktionsenergiespeichersystems (100) bis zu einem Sollwert (602) der Spannung (206) der Systemhochvoltschnittstelle (162) ausgegeben (522) wird und beim Erreichen des Sollwerts die Energiespeicher des zweiten Clusters zugeschaltet werden.

10. Traktionsenergiespeichersystem nach Anspruch 9, wobei die Systemsteuerung (140) den Sollwert (602) auf Grundlage der Leerlaufspannungen des zweiten Clusters berechnet.

11. Traktionsenergiespeichersystem nach Anspruch 9 oder 10, wobei die Systemsteuerung dazu ausgebildet ist, als den zweiten Cluster den Cluster zu wählen, dessen Leerlaufspannungen die kleinste Differenz zur Spannung (206) der Systemhochvoltschnittstelle (162) aufweisen.

12. Traktionsenergiespeichersystem nach einem der Ansprüche 9 bis 11, wobei die Systemsteuerung (140) dazu ausgebildet ist, das Zuschalten (526) nach Maßgabe der Clusterzuordnung zu wiederholen bis alle Energiespeicher zugeschaltet sind.

13. Traktionsenergiespeichersystem nach einem der Ansprüche 1 bis 12, wobei die Systemsteuerung ferner dazu ausgebildet ist, nach dem Zuschalten (520; 526) ein Systemsignal (404) zur Zuschaltbestätigung und/oder zur Angabe eines geänderten Verbindungstatus an das Fahrzeug auszugeben.

14. Traktionsenergiespeichersystem nach Anspruch 13, wobei:

das Systemsignal eine Fehlermeldung, Warnmeldung oder Diagnosemeldung ist; und/oder
die Systemsteuerung (140) dazu ausgebildet ist, Signale von den Energiespeichersteuerungen (130) zu erhalten, auf Grundlage der erhaltenen Signale das Systemsignal zu erzeugen und das Systemsignal an ein Funktionsnetz (150) des Fahrzeugs, vorzugsweise an ein Niederspannungsbordnetz und/oder an ein Bussystem zur Kommunikation zwischen Fahrzeugfunktionen, auszugeben, wobei vorzugsweise:
das Systemsignal von der Systemsteuerung (140) an das Funktionsnetz (150) über einen direkten Anschluss der Systemsteuerung (140) an das Funktionsnetz 150 ausgebbar ist; und/oder
das Systemsignal an das Funktionsnetz (150) über einen externen Datenbus (132) ausgebbar ist.

15. Traktionsenergiespeichersystem nach einem der Ansprüche 1 bis 14, wobei eine der Energiespeichersteuerungen (130) die Funktion der Systemsteuerung (140) ausführt.

16. Traktionsenergiespeichersystem nach Anspruch 15, wobei jeder der Energiespeicher ferner eine erste Datenschnittstelle (142) und eine zweite Datenschnittstelle (144) umfasst, die jeweils im Energiespeicher (110) mit der Energiespeichersteuerung (130) verbunden ist,

wobei bei den Energiespeichern (110-S), welche nicht die Funktion der Systemsteuerung ausführen, die erste Datenschnittstelle (142) außerhalb des Energiespeichers unverbunden ist, und die zweite Datenschnittstelle (144) verbunden ist zur Ausgabe eines Signals (402) mit dem Speicherzustand an die zweite Datenschnittstelle (144) des Energiespeichers (110-M), welcher die Funktion der Systemsteuerung (140) ausführt; und
wobei bei dem Energiespeicher (110-M), welcher die Funktion der Systemsteuerung (140) ausführt, die erste Datenschnittstelle (142) außerhalb des Energiespeichers mit dem Fahrzeug verbunden ist zur Ausgabe des Systemsignals (404), und die zweite Datenschnittstelle (144) verbunden ist zum Erhalt der Signale von den zweiten Datenschnittstellen (144) der Energiespeicher (110-S), welche nicht die Funktion der Systemsteuerung (140) ausführen.

17. Kraftfahrzeug, insbesondere Nutzfahrzeug, das ein Traktionsenergiespeichersystem (100) nach einem der Ansprüche 1 bis 16 umfasst.

# FIG. 1

EP 4 286 215 A1

EP 4 286 215 A1

FIG. 2

FIG. 3

FIG. 4

# FIG. 5

500

110-S

502 — Steuersignal (z. B. Aktivierung)

Innenwiderstand

Leerlaufspannung

Stromgrenzen

Energie-speicher $j$

508-$j$  506-$j$

504-$j$ Fahrzeugsignal mit Zuschaltanforderung

510 Berechnung Ausgleichsströme

512 Ausgleichs-ströme

Betriebszustand Laden/Entladen

514 — Bildung von Clustern mit Energiespeichern gleicher Leerlaufspannungen

Abgleich der Ausgleichsströme gegen die Stromgrenzen

Nicht zu-schaltfähiges Cluster $k=2, ..., m$

Zuschaltfähiges Cluster 1

520 Zuschalten der weiteren Energiespeicher des Clusters 1

518 Zuschalten des ersten Energiespeichers des Clusters 1

516 Vorladen mittels eines ersten Energiespeichers des Clusters 1

Ausgabe Zuschalt-bestätigung, Verbindungs-status

526 Zuschalten der Energiespeicher des Clusters $k$

524 Erfassen der Spannung der verbundenen Cluster 1, ..., $k$-1 beim Laden oder Entladen bis zum Erreichen des Sollwerts

522 Ausgabe Steuersignal zum Laden oder Entladen mit Sollwert gemäß Cluster $k$

Ausgabe Verbindungs-status

Wiederholung für verbleibende Cluster $k$+1, ..., $m$

EP 4 286 215 A1

FIG. 6

600

EP 4 286 215 A1

# FIG. 7

700

EP 4 286 215 A1

Strom $I_2$ des TES 2

702-2

508-2

720

718

512

206 $-U \begin{pmatrix} \dfrac{1}{R_1} \\ \dfrac{1}{R_2} \\ \vdots \end{pmatrix}$

Stromgrenzwert des TES 2

$I_{int}$

204

712

714

$I$

$\begin{pmatrix} I_1 \\ I_2 \\ \vdots \end{pmatrix}$

Reziproker Innenwiderstandsvektor

Theoretischer Kurzschlussstrom

716

Stromverteilung

710

508-1

702-1

Strom $I_1$ des TES 1

Stromgrenzwert des TES 1

# FIG. 8

700

Strom $I_2$ des TES 2

702-2

720

718

508-2

206

$-U \begin{pmatrix} \dfrac{1}{R_1} \\ \dfrac{1}{R_2} \\ \vdots \end{pmatrix}$

Stromgrenzwert des TES 2

804

712

Reziproker Innenwiderstandsvektor

714

716

716

802

Theoretischer Kurzschlussstrom

204

806

508-1

702-1

Strom $I_1$ des TES 1

Stromgrenzwert des TES 1

EP 4 286 215 A1

Europäisches
Patentamt

European
Patent Office

Office européen
des brevets

**EUROPÄISCHER RECHERCHENBERICHT**

Nummer der Anmeldung

EP 23 18 6007

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2009 019531 A1 (DAIMLER AG [DE]) 24. Dezember 2009 (2009-12-24) | 2,3 | INV. B60L58/18 |
| A | * das ganze Dokument * | 9,10,16 | |
| | ----- | | |
| A | US 2015/273995 A1 (MUTO KENJI [JP] ET AL) 1. Oktober 2015 (2015-10-01) * das ganze Dokument * | 1-16 | |
| | ----- | | |
| Y | EP 2 775 585 A1 (NISSAN MOTOR [JP]) 10. September 2014 (2014-09-10) | 4-7 | |
| A | * Absatz [0021] - Absatz [0022] * | 16 | |
| | ----- | | |
| Y | WO 2012/072372 A2 (ZAHNRADFABRIK FRIEDRICHSHAFEN [DE]; EISELE MARKUS [DE]; WIEGAND YVONNE) 7. Juni 2012 (2012-06-07) | 8 | |
| A | * Seite 5, Absatz 3 * * Seite 10, Absatz 1 * | 16 | |
| | ----- | | |
| X | DE 10 2010 061025 A1 (FEV GMBH [DE]) 6. Juni 2012 (2012-06-06) | 1,9-16 | |
| Y | * Absatz [0002] * | 2-8 | **RECHERCHIERTE SACHGEBIETE (IPC)** |
| | * Absatz [0013] * * Absatz [0023] * | | B60L |
| | ----- | | |
| A | WO 2016/158396 A1 (HITACHI AUTOMOTIVE SYSTEMS LTD [JP]) 6. Oktober 2016 (2016-10-06) * Abbildung 1 * & EP 3 279 679 A1 (HITACHI AUTOMOTIVE SYSTEMS LTD [JP]) 7. Februar 2018 (2018-02-07) * Abbildung 1 * | 1-17 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 27. Oktober 2023 | Wansing, Ansgar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 18 6007

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2023

| Im Recherchenbericht angeführtes Patentdokument | Datum der Veröffentlichung | Mitglied(er) der Patentfamilie | Datum der Veröffentlichung |
|---|---|---|---|
| DE 102009019531 A1 | 24-12-2009 | CN 102438854 A | 02-05-2012 |
| | | DE 102009019531 A1 | 24-12-2009 |
| | | EP 2424747 A2 | 07-03-2012 |
| | | JP 5350537 B2 | 27-11-2013 |
| | | JP 2012525812 A | 22-10-2012 |
| | | US 2012056477 A1 | 08-03-2012 |
| | | WO 2010124861 A2 | 04-11-2010 |
| US 2015273995 A1 | 01-10-2015 | JP 6180982 B2 | 16-08-2017 |
| | | JP 2015189387 A | 02-11-2015 |
| | | US 2015273995 A1 | 01-10-2015 |
| EP 2775585 A1 | 10-09-2014 | CN 103918156 A | 09-07-2014 |
| | | EP 2775585 A1 | 10-09-2014 |
| | | JP 6119143 B2 | 26-04-2017 |
| | | JP 2013118800 A | 13-06-2013 |
| | | US 2014265600 A1 | 18-09-2014 |
| | | WO 2013065454 A1 | 10-05-2013 |
| WO 2012072372 A2 | 07-06-2012 | CN 103250322 A | 14-08-2013 |
| | | DE 102010062249 A1 | 21-06-2012 |
| | | EP 2647100 A2 | 09-10-2013 |
| | | JP 2014506105 A | 06-03-2014 |
| | | US 2013234508 A1 | 12-09-2013 |
| | | WO 2012072372 A2 | 07-06-2012 |
| DE 102010061025 A1 | 06-06-2012 | KEINE | |
| WO 2016158396 A1 | 06-10-2016 | CN 107533109 A | 02-01-2018 |
| | | EP 3279679 A1 | 07-02-2018 |
| | | JP 6496810 B2 | 10-04-2019 |
| | | JP WO2016158396 A1 | 07-12-2017 |
| | | US 2018074129 A1 | 15-03-2018 |
| | | WO 2016158396 A1 | 06-10-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102010002939 A1
- US 20070080662 A1
- DE 102007038532 A1